# EUROPEAN PATENT APPLICATION

(11) **EP 4 808 006 A1**
(43) Date of publication of application: **16.09.2026**
(21) Application number: 24887759.9
(22) Date of filing: 24.10.2024
(51) Int. Cl.: H04B 7/0456

(54) **INFORMATION PROCESSING METHOD AND APPARATUS**

(30) Priority: 07.11.2023 CN 202311475268
(71) Applicant: Datang Mobile Communications Equipment Co., Ltd., Beijing 100085 (CN)
(72) Inventor: HUANG, Qiuping, Beijing 100085 (CN); GAO, Qiubin, Beijing 100085 (CN)
(74) Representative: Studio Torta S.p.A.
(86) International application number: PCT/CN2024/126908
(87) International publication number: WO 2025/098146

(57) **Abstract**

This application provides an information processing method and apparatus, and relates to the field of communication technologies. The method includes: determining first information corresponding to channel state information (CSI), wherein the first information is used to indicate one or more of: quality of the CSI, quality of a channel or a channel estimation value corresponding to the CSI, and quality of a precoding matrix corresponding to the CSI; and transmitting the CSI and the first information.

## Description

### CROSS-REFERENCE TO RELATED APPLICATIONS

This application claims priority to Chinese Patent Application No. 202311475268.6 filed in China on November 7, 2023, the entire contents of which are incorporated herein by reference.

### TECHNICAL FIELD

The present disclosure relates to the field of communication technology, and in particular to an information processing method and apparatus.

### BACKGROUND

In related technologies, a terminal or a user equipment (User Equipment, UE) needs to report channel state information (Channel State Information, CSI) for performance monitoring or model training, but when the quality of CSI is low, performance monitoring performed by using such low-quality CSI may be inaccurate, or an artificial intelligence (Artificial Intelligence, AI)/machine learning (Machine Learning, ML) model trained by using such low-quality CSI is also difficult to ensure good performance.

### SUMMARY

The present disclosure is to provide an information processing method and apparatus, so as to solve a problem that it is difficult to ensure performance quality when a base station uses low-quality channel state information (Channel State Information, CSI) for performance monitoring or model training in related technologies.

To achieve the above purpose, the present disclosure provides an information processing method, performed by a first device, and the method includes:
determining first information corresponding to CSI, where the first information is used to indicate one or more of a quality of the CSI, a quality of a channel corresponding to the CSI or a channel estimation value, and a quality of a precoding matrix corresponding to the CSI;
transmitting the CSI and the first information.

Optionally, the method in the embodiments of the present disclosure further includes:
receiving a first reference signal;
determining the CSI based on the first reference signal.

Optionally, the determining the first information corresponding to CSI includes:
determining the first information corresponding to the CSI based on configuration information of the first reference signal and/or a second reference signal.

Optionally, the first information includes at least one of the following:
channel quality information;
channel information;
quality level information;
error information;
reference signal information corresponding to the CSI;
position information of the first device;
speed information of the first device.

Optionally, the channel quality information includes at least one of the following:
a signal to interference plus noise ratio (Signal to Interference plus Noise Ratio, SINR) or a signal to noise ratio (Signal to Noise Ratio, SNR);
a reference signal received power (Reference Signal Received Power, RSRP);
a channel quality indicator (Channel Quality Indicator, CQI).

Optionally, the channel information includes information used to indicate that the channel corresponds to at least one of the following:
delay spread;
angle spread;
mean delay;
Doppler shift;
Doppler spread;
mean squared error (Mean Squared Error, MSE);
normalized mean squared error (Normalized Mean Squared Error, NMSE);
minimum mean squared error (Minimum Mean Squared Error, MMSE);
channel statistics;
distribution information of the channel.

Optionally, the quality level information includes at least one of the following:
a quality level of the CSI;
a quality level of a channel estimation value corresponding to the CSI;
a quality level of a precoding matrix corresponding to the CSI.

Optionally, the error information includes at least one of the following:
error information of the CSI;
error information of a channel corresponding to the CSI or a channel estimation value;
error information of a precoding matrix corresponding to the CSI.

Optionally, the error information includes at least one of the following:
a distance error;
the MSE, the NMSE or the MMSE;
error information of the CQI;
error information of the channel statistics.

Optionally, the reference signal information corresponding to the CSI includes at least one of the following:
a time-domain density of a first reference signal corresponding to the CSI;
a frequency-domain density of the first reference signal corresponding to the CSI;
a pattern of the first reference signal corresponding to the CSI.

Optionally, the position information includes at least one of the following:
reference signal time difference (Reference Signal Time Difference, RSTD);
reference signal received power (Reference Signal Received Power, RSRP);
relative time difference (Relative Time Difference, RTD).
the SNR or the SINR;
a transmit-receive time difference of the first device;
a time of arrival (Time of Arrival, TOA) measurement value;
a positioning reference signal (Positioning Reference Signal, PRS) resource identity (ID) or a PRS resource set ID;
angle information;
a timestamp associated with a measurement value of the first device;
a position index.

The embodiments of the present disclosure further provide an information processing method, performed by a second device, and the method includes:
receiving channel state information (Channel State Information, CSI) and first information, where the first information is used to indicate one or more of a quality of the CSI, a quality of a channel corresponding to the CSI or a channel estimation value, and a quality of a precoding matrix corresponding to the CSI.

Optionally, the method in the embodiments of the present disclosure further includes:
determining data for performance monitoring or model training based on the CSI and the first information.

Optionally, the method in the embodiments of the present disclosure further includes at least one of the following:
transmitting a first reference signal and/or a second reference signal;
transmitting configuration information of the first reference signal.

Optionally, the first information includes at least one of the following:
channel quality information;
channel information;
quality level information;
error information;
reference signal information corresponding to the CSI;
position information of the first device;
speed information of the first device.

Optionally, the channel quality information includes at least one of the following:
a signal to interference plus noise ratio (Signal to Interference plus Noise Ratio, SINR) or a signal to noise ratio (Signal to Noise Ratio, SNR);
a reference signal received power (Reference Signal Received Power, RSRP);
a channel quality indicator (Channel Quality Indicator, CQI).

Optionally, the channel information includes information used to indicate that the channel corresponds to at least one of the following:
delay spread;
angle spread;
mean delay;
Doppler shift;
Doppler spread;
mean squared error (Mean Squared Error, MSE);
normalized mean squared error (Normalized Mean Squared Error, NMSE);
minimum mean squared error (Minimum Mean Squared Error, MMSE).
channel statistics;
distribution information of the channel.

Optionally, the quality level information includes at least one of the following:
a quality level of the CSI;
a quality level of a channel estimation value corresponding to the CSI;
a quality level of a precoding matrix corresponding to the CSI.

Optionally, the error information includes at least one of the following:
error information of the CSI;
error information of a channel corresponding to the CSI or a channel estimation value;
error information of a precoding matrix corresponding to the CSI.

Optionally, the error information includes at least one of the following:
a distance error;
the MSE, the NMSE or the MMSE;
error information of the CQI.
error information of the channel statistics.

Optionally, the reference signal information corresponding to the CSI includes at least one of the following:
a time-domain density of a first reference signal corresponding to the CSI;
a frequency-domain density of the first reference signal corresponding to the CSI;
a pattern of the first reference signal corresponding to the CSI.

Optionally, the position information includes at least one of the following:
reference signal time difference (Reference Signal Time Difference, RSTD);
reference signal received power (Reference Signal Received Power, RSRP);
relative time difference (Relative Time Difference, RTD);
the SNR or the SINR;
a transmit-receive time difference of the first device;
a time of arrival (Time of Arrival, TOA) measurement value;
a positioning reference signal (Positioning Reference Signal, PRS) resource identity (ID) or a PRS resource set ID;
angle information;
a timestamp associated with a measurement value of the first device.
a position index.

The embodiments of the present disclosure further provide an information processing apparatus, including: a memory, a transceiver and a processor.

The memory is configured to store a computer program; the transceiver is configured to transmit and receive data under the control of the processor; the processor is configured to read the computer program from the memory and perform the following operations:
determining first information corresponding to channel state information (Channel State Information, CSI), where the first information is used to indicate one or more of a quality of the CSI, a quality of a channel corresponding to the CSI or a channel estimation value, and a quality of a precoding matrix corresponding to the CSI; and
transmitting the CSI and the first information.

Optionally, the processor is further configured to perform the following operations:
receiving a first reference signal;
determining the CSI based on the first reference signal.

Optionally, the processor is further configured to perform the following operations:
determining first information corresponding to the CSI based on configuration information of the first reference signal and/or a second reference signal.

Optionally, the first information includes at least one of the following:
channel quality information;
channel information;
quality level information;
error information;
reference signal information corresponding to the CSI;
position information of the first device;
speed information of the first device.

Optionally, the channel quality information includes at least one of the following:
a signal to interference plus noise ratio (Signal to Interference plus Noise Ratio, SINR) or a signal to noise ratio (Signal to Noise Ratio, SNR);
a reference signal received power (Reference Signal Received Power, RSRP);
a channel quality indicator (Channel Quality Indicator, CQI).

Optionally, the channel information includes information used to indicate that the channel corresponds to at least one of the following:
delay spread;
angle spread;
mean delay;
Doppler shift;
Doppler spread;
mean squared error (Mean Squared Error, MSE);
normalized mean squared error (Normalized Mean Squared Error, NMSE);
minimum mean squared error (Minimum Mean Squared Error, MMSE);
channel statistics.
distribution information of the channel.

Optionally, the quality level information includes at least one of the following:
a quality level of the CSI;
a quality level of a channel estimation value corresponding to the CSI;
a quality level of a precoding matrix corresponding to the CSI.

Optionally, the error information includes at least one of the following:
error information of the CSI;
error information of a channel corresponding to the CSI or a channel estimation value;
error information of a precoding matrix corresponding to the CSI.

Optionally, the error information includes at least one of the following:
a distance error;
the MSE, the NMSE or the MMSE;
error information of the CQI;
error information of the channel statistics.

Optionally, the reference signal information corresponding to the CSI includes at least one of the following:
a time-domain density of a first reference signal corresponding to the CSI;
a frequency-domain density of the first reference signal corresponding to the CSI;
a pattern of the first reference signal corresponding to the CSI.

Optionally, the position information includes at least one of the following:
reference signal time difference (Reference Signal Time Difference, RSTD);
reference signal received power (Reference Signal Received Power, RSRP);
relative time difference (Relative Time Difference, RTD);
the SNR or the SINR.
a transmit-receive time difference of the first device;
a time of arrival (Time of Arrival, TOA) measurement value;
a positioning reference signal (Positioning Reference Signal, PRS) resource identity (ID) or a PRS resource set ID;
angle information;
a timestamp associated with a measurement value of the first device;
a position index.

The embodiments of the present disclosure further provide an information processing apparatus, including: a memory, a transceiver and a processor.

The memory is configured to store a computer program; the transceiver is configured to transmit and receive data under the control of the processor; the processor is configured to read the computer program from the memory and perform the following operations:
receiving channel state information (Channel State Information, CSI) and first information, where the first information is used to indicate one or more of a quality of the CSI, a quality of a channel corresponding to the CSI or a channel estimation value, and a quality of a precoding matrix corresponding to the CSI.

Optionally, the processor is further configured to perform the following operations:
determining data for performance monitoring or model training based on the CSI and the first information.

Optionally, the processor is further configured to perform at least one of the following operations:
transmitting a first reference signal and/or a second reference signal;
transmitting configuration information of the first reference signal.

Optionally, the first information includes at least one of the following:
channel quality information;
channel information;
quality level information;
error information;
reference signal information corresponding to the CSI.
position information of the first device;
speed information of the first device.

Optionally, the channel quality information includes at least one of the following:
a signal to interference plus noise ratio (Signal to Interference plus Noise Ratio, SINR) or a signal to noise ratio (Signal to Noise Ratio, SNR);
a reference signal received power (Reference Signal Received Power, RSRP);
a channel quality indicator (Channel Quality Indicator, CQI).

Optionally, the channel information includes information used to indicate that the channel corresponds to at least one of the following:
delay spread;
angle spread;
mean delay;
Doppler shift;
Doppler spread;
mean squared error (Mean Squared Error, MSE);
normalized mean squared error (Normalized Mean Squared Error, NMSE);
minimum mean squared error (Minimum Mean Squared Error, MMSE).
channel statistics;
distribution information of the channel.

Optionally, the quality level information includes at least one of the following:
a quality level of the CSI;
a quality level of a channel estimation value corresponding to the CSI;
a quality level of a precoding matrix corresponding to the CSI.

Optionally, the error information includes at least one of the following:
error information of the CSI;
error information of a channel corresponding to the CSI or a channel estimation value;
error information of a precoding matrix corresponding to the CSI.

Optionally, the error information includes at least one of the following:
a distance error;
the MSE, the NMSE or the MMSE;
error information of the CQI;
error information of the channel statistics.

Optionally, the reference signal information corresponding to the CSI includes at least one of the following:
a time-domain density of a first reference signal corresponding to the CSI;
a frequency-domain density of the first reference signal corresponding to the CSI;
a pattern of the first reference signal corresponding to the CSI.

Optionally, the position information includes at least one of the following:
reference signal time difference (Reference Signal Time Difference, RSTD).
reference signal received power (Reference Signal Received Power, RSRP);
relative time difference (Relative Time Difference, RTD);
the SNR or the SINR;
a transmit-receive time difference of the first device;
a time of arrival (Time of Arrival, TOA) measurement value;
a positioning reference signal (Positioning Reference Signal, PRS) resource identity (ID) or a PRS resource set ID;
angle information;
a timestamp associated with a measurement value of the first device;
a position index.

The embodiments of the present disclosure further provide an information processing apparatus, including:
a first determining unit, configured to determine first information corresponding to channel state information (Channel State Information, CSI), where the first information is used to indicate one or more of a quality of the CSI, a quality of a channel corresponding to the CSI or a channel estimation value, and a quality of a precoding matrix corresponding to the CSI;
a first transmitting unit, configured to transmit the CSI and the first information.

The embodiments of the present disclosure further provide an information processing apparatus, including:
a first receiving unit, configured to receive channel state information (Channel State Information, CSI) and first information, where the first information is used to indicate one or more of a quality of the CSI, a quality of a channel corresponding to the CSI or a channel estimation value, and a quality of a precoding matrix corresponding to the CSI.

The embodiments of the present disclosure further provide a processor-readable storage medium, where the processor-readable storage medium stores a computer program, and the computer program is used to enable a processor to perform steps of the information processing method as described above.

The technical solutions of the present disclosure at least have the following beneficial effects:

In the embodiments of the present disclosure, first information corresponding to channel state information (Channel State Information, CSI) is determined, where the first information is used to indicate one or more of a quality of the CSI, a quality of a channel corresponding to the CSI or a channel estimation value, and a quality of a precoding matrix corresponding to the CSI; and the CSI and the first information are transmitted. Therefore, a second device can determine the quality of the CSI based on the first information, avoid performing performance monitoring or artificial intelligence (Artificial Intelligence, AI)/machine learning (Machine Learning, ML) model training by using low-quality CSI, and thus can effectively improve performance quality of performance monitoring or an AI/ML model.

### BRIEF DESCRIPTION OF THE DRAWINGS

FIG. 1a shows one schematic structural diagram of a network system applicable to an embodiment of the present disclosure;
FIG. 1b shows another schematic structural diagram of a network system applicable to an embodiment of the present disclosure;
FIG. 2 shows one schematic flow chart of an information processing method according to an embodiment of the present disclosure;
FIG. 3 shows one schematic diagram of information transmission according to an embodiment of the present disclosure;
FIG. 4 shows another schematic diagram of information transmission according to an embodiment of the present disclosure;
FIG. 5 shows another schematic flow chart of an information processing method according to an embodiment of the present disclosure;
FIG. 6 shows one structural block diagram of an information processing apparatus according to an embodiment of the present disclosure;
FIG. 7 shows another structural block diagram of an information processing apparatus according to an embodiment of the present disclosure;
FIG. 8 shows one schematic module diagram of an information processing apparatus according to an embodiment of the present disclosure;
FIG. 9 shows another schematic module diagram of an information processing apparatus according to an embodiment of the present disclosure.

### DETAILED DESCRIPTION

In order to make a to-be-solved technical problem, a technical solution and advantages of the present disclosure clearer, the technical solutions in the embodiments of the present disclosure will be clearly and completely described below in conjunction with the accompanying drawings. Apparently, the described embodiments merely relate to a part of, rather than all of, the embodiments of the present disclosure, and based on these embodiments, a person of ordinary skill in the art may obtain other embodiments without creative effort, which shall also fall within the scope of the present disclosure.

Terms "first", "second" and the like in the specification and the claims of the present disclosure are used to distinguish similar objects, and are not necessarily used to describe a specific order or sequence. It should be understood that data used in such a way may be interchangeable under appropriate circumstances, so that the embodiments of the present disclosure described herein can be implemented in an order other than those illustrated or described herein. In addition, the terms "include" and "have", and any variations thereof, are intended to cover a non-exclusive inclusion, for example, a process, a method, a system, a product or an apparatus that includes a series of steps or units is not necessarily limited to those steps or units explicitly listed, but may include other steps or units not explicitly listed or inherent to such process, method, product or apparatus.

The term "and/or" in the embodiments of the present disclosure describes an association relationship of associated objects, indicating that there may be three types of relationships. For example, A and/or B can represent three situations of A alone, both A and B, and B alone. The character "/" generally indicates that the associated objects before and after the character is in an "or" relationship. The term "multiple" in the embodiments of the present disclosure refers to two or more, and other quantifiers are similar thereto.

In the embodiments of the present disclosure, words such as "exemplary" or "for example" are used to represent giving an example, illustration or description. Any embodiment or design solution described as "exemplary" or "for example" in the embodiments of the present disclosure should not be construed as being more preferred or more advantageous than other embodiments or design solutions. Specifically, the use of "exemplary" or "for example" is intended to present relevant concepts in a specific manner.

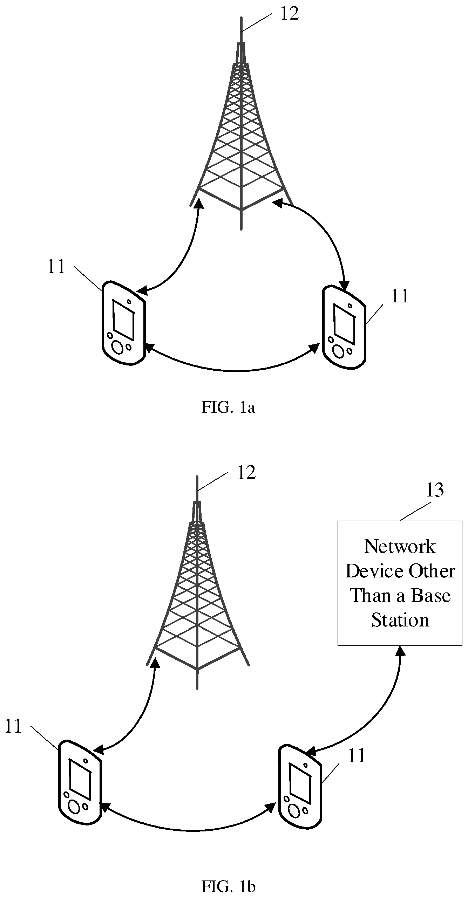

FIG. 1a and FIG. 1b show schematic block diagrams of a wireless communication system applicable to the embodiments of the present disclosure. The wireless communication system includes a terminal-side device and a network-side device (or a network device). The terminal-side device 11 may include a terminal or a user equipment (User Equipment, UE), and may also include a server (UE server) serving the UE. The UE server may undertake functions such as data collection, model training, and model monitoring. The network-side device may include a base station 12 and/or a network device 13 different from the base station, and the network device 13 different from the base station may be a network server (NW server), a third-party server, a core network device and/or a management entity. The network server may be a server serving the base station, and the third-party server may be a server different from the network server and the UE server, for example, the third-party server may be a server provided by a chip manufacturer, a terminal manufacturer, an operator, or another service provider. The network server or the third-party server may be a server used to provide functions such as data collection, model training, and model monitoring. The management entity may provide functions such as data collection, model training and/or model monitoring. A model in the embodiments of the present disclosure includes, but is not limited to, an artificial intelligence (Artificial Intelligence, AI) model, a machine learning (Machine Learning, ML) model, a neural network model, and a data-driven technology model, and is also referred to as an AI/ML model hereinafter. The model may be a model deployed in a first device, or a model deployed in a second device. The model may be deployed in the UE or a network device, and the like.

In order to enable those skilled in the art to better understand the embodiments of the present disclosure, the following description is provided first.

In a wireless communication system, a user equipment (User Equipment, UE) measures channel state information (Channel State Information, CSI) based on a downlink reference signal transmitted by a base station, for example, a channel state information reference signal (Channel State Information Reference Signal, CSI-RS), and transmits the measured CSI to the base station. A process in which the UE transmits the CSI to the base station is also referred to as CSI reporting, or CSI feedback.

The CSI transmitted by the UE to the base station may include multiple pieces of information. For example, in a new radio (New Radio, NR) system, the CSI may include one or more of the following information:
a channel quality indicator (Channel Quality Indicator, CQI);
a precoding matrix indicator (Precoding Matrix Indicator, PMI);
a CSI-RS resource indicator (CSI-RS Resource Indicator, CRI);
a synchronization signal/physical broadcast channel block resource indicator (SS/PBCH Block Resource Indicator, SSBRI);
a layer indicator (Layer Indicator, LI);
a rank indicator (Rank Indicator, RI);
a layer 1 reference signal received quality (Layer 1 Reference Signal Received Quality, L1-RSRP);
a layer 1 signal to interference plus noise ratio (Layer 1 Signal to Interference Plus Noise Ratio, L1-SINR);
a capability set index (Capability Set Index).

The base station receives the CSI fed back by the UE. Based on the CSI fed back by the UE, the base station can perform beam selection, and determine scheduling information, for example, a modulation and coding scheme (Modulation and Coding Scheme, MCS) level for downlink transmission, precoding matrix information (Precoding Matrix Indicator, PMI), a number of transmission layers (Rank Indicator, RI), and the like.

Artificial intelligence (Artificial Intelligence, AI)/machine learning (Machine Learning, ML) technology has a strong capability of optimization and fitting. By fully learning channel structure knowledge through a neural network, better channel compression and reconstruction performance can be obtained. Therefore, AI/ML technology is used to enhance CSI feedback and acquisition, for example, used for CSI compression, CSI prediction, and the like.

In an example of an AI/ML-based massive multiple input multiple output (Multiple In Multiple Out, MIMO) CSI feedback, an encoder and a decoder are used for implementation. The encoder is applied on a UE side and is used for CSI compression, and compresses an original N-dimensional channel matrix H into an M-dimensional codeword s by using sparsity characteristics of the channel matrix, and a principle thereof can be expressed as:
$s = {f}_{en} \left(H\right) ;$
a decoder is applied on a network side and is used for CSI reconstruction, that is, restoring a received codeword s to an original channel matrix Ĥ, and a principle thereof can be expressed as:
$\hat{H} = {f}_{de} \left(s\right) .$

When applied to an actual communication system, a basic working mechanism thereof is as follows:
after estimating a channel matrix H in a space-frequency domain, a user side generates a compressed codeword s by using an encoder based on input CSI obtained from an original channel or from preprocessing an original channel, and feeds back the compressed codeword s to a base station;
after receiving the compressed codeword s, the base station reconstructs/restores the original channel/input CSI by using a decoder.

The above is a basic principle of AI/ML-based space-frequency-domain CSI compression feedback. That is, the AI/ML-based space-frequency-domain CSI compression feedback is a bilateral model deployed on both sides.

UE side: an original channel or a preprocessed channel is compressed by using an AI/ML generation part (Artificial Intelligence/Machine Learning generation part, or referred to as a CSI generation part, an AI/ML encoder, and the like), and is quantized into binary bits after compression and then fed back to a base station;
network side: binary bits fed back from the UE side are dequantized, and channel information is restored by using an AI/ML reconstruction part (Artificial Intelligence/Machine Learning reconstruction part, or referred to as a CSI reconstruction part, an AI/ML decoder, and the like). Optionally, the network side further performs some post-processing operations.

In another AI-based CSI feedback manner, for time-domain CSI prediction on a UE side, the UE collects CSI information at multiple historical moments, predicts CSI information at a future moment by using an AI/ML model, and feeds back the predicted CSI information to a base station. The predicted CSI information may be fed back by using a traditional CSI feedback manner, for example, by using a codebook-based CSI feedback manner.

For time-domain CSI prediction on a base station side, the base station receives CSI feedback information at multiple historical moments fed back by a terminal, predicts CSI at a future moment by using an AI/ML model, and the CSI feedback information at the historical moments may be fed back by using a traditional feedback manner, for example, by using a codebook-based CSI feedback manner.

When AI/ML-based CSI compression/feedback/acquisition is performed, in order to perform performance monitoring (for example, performance monitoring of an AI/ML model, or performance monitoring of an AI/ML-based function), or perform model training or model update, the UE needs to feed back CSI with higher accuracy to a base station or a certain device, so that the base station or the device can perform performance monitoring, model training, or model update by using the CSI with higher accuracy. The device herein may be a management entity (management entity), and the like.

The CSI with higher accuracy used for performance monitoring/model training/model update usually has a higher feedback accuracy than CSI used for scheduling, or is CSI obtained in a non-AI manner. For example, the CSI may be CSI obtained in a codebook-based manner, or may be quantization for a channel matrix, or may be a precoding matrix and the like obtained by quantizing an eigenvector.

The CSI with higher accuracy used for performance monitoring/model training/model update is also referred to as ground-truth CSI.

One ground-truth CSI may be referred to as one sample, one sample value, or one piece of data.

In order to achieve purposes such as AI/ML model training, data analysis, or inference, a process of collecting data by a base station or other devices may be referred to as data collection.

In related technologies, it is merely proposed that a UE needs to feed back ground-truth CSI for performance monitoring or model training. When the ground-truth CSI is used for performance monitoring or model training, if the quality of the ground-truth CSI is low, that is, channel estimation performed by the UE by using CSI-RS is very inaccurate, performance monitoring performed by using such low-quality ground-truth CSI will also be inaccurate, and an AI/ML model trained by using such low-quality samples is also difficult to ensure good performance. A process of collecting data by a base station or other devices for purposes such as AI/ML model training, data analysis, or inference may be referred to as data collection.

A detailed description will be given below, in conjunction with the accompanying drawings, of an information processing method provided in the embodiments of the present disclosure through some embodiments and application scenarios thereof.

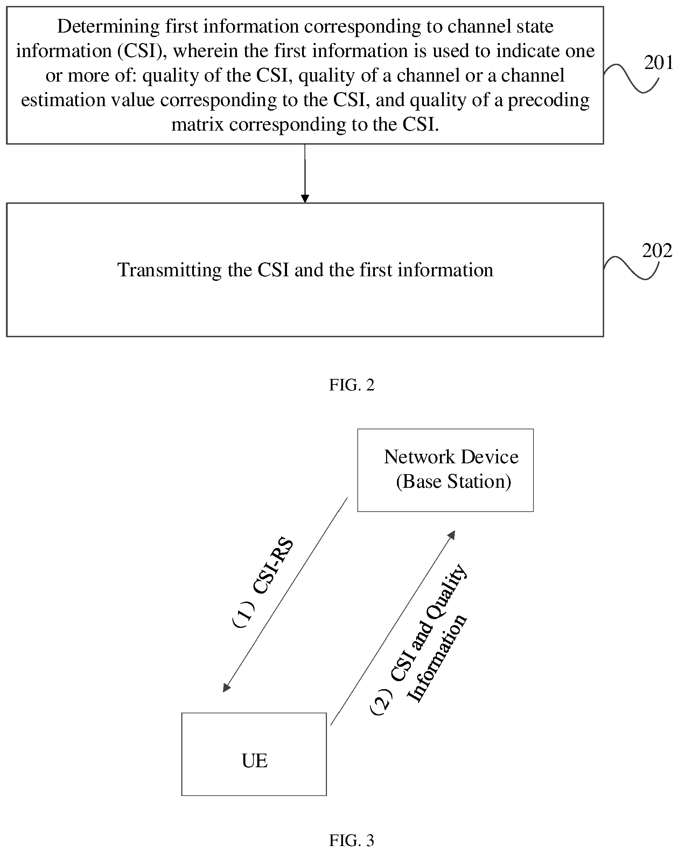

As shown in FIG. 2, the embodiments of the present disclosure provide an information processing method, performed by a first device. The method includes:

Step 201: determining first information corresponding to channel state information (Channel State Information, CSI), where the first information is used to indicate one or more of a quality of the CSI, a quality of a channel corresponding to the CSI or a channel estimation value, and a quality of a precoding matrix corresponding to the CSI.

In the embodiments of the present disclosure, the first device is a terminal.

In the embodiments of the present disclosure, the first information may also be described as quality information.

Optionally, the CSI is ground-truth CSI. The ground-truth CSI is CSI used for one or more of performance monitoring, model training, and model update. Optionally, the performance monitoring includes one or more of model monitoring and functionality monitoring.

Certainly, the CSI may also be CSI under a certain CSI-RS configuration, or CSI under a certain reporting configuration, or CSI of a certain type, which is not specifically limited herein.

Step 202: transmitting the CSI and the first information.

Optionally, the first device transmits the CSI and the first information to a second device. The second device may be a base station, or may be a management entity different from the base station, such as a server.

Optionally, the CSI includes at least one of the following:
CQI;
PMI;
CRI;
SSBRI;
LI;
RI;
L1-RSRP;
L1-SINR;
Capability Set Index;
quantization information of a channel.

The PMI is precoding matrix indicator information. Optionally, the PMI is precoding matrix indicator information determined in a codebook-based manner. Optionally, the PMI is quantization information of an eigenvector obtained after performing singular value decomposition (Singular Value Decomposition, SVD) on a channel (or a channel estimation value).

Optionally, the quantization information of the channel is information obtained by quantizing a channel matrix. Optionally, the quantization is scalar quantization, for example, uniform quantization or non-uniform quantization. Optionally, the quantization is vector quantization.

In the embodiments of the present disclosure, first information corresponding to channel state information (Channel State Information, CSI) is determined, where the first information is used to indicate one or more of a quality of the CSI, a quality of a channel corresponding to the CSI or a channel estimation value, and a quality of a precoding matrix corresponding to the CSI; and the CSI and the first information are transmitted. Therefore, a second device can determine the quality of the CSI based on the first information, avoid performing performance monitoring or artificial intelligence (Artificial Intelligence, AI)/machine learning (Machine Learning, ML) model training and the like by using low-quality CSI, and thus can effectively improve performance quality of performance monitoring or an AI/ML model.

Optionally, the method in the embodiments of the present disclosure further includes:
receiving a first reference signal;
determining the CSI according to the first reference signal, that is, the CSI (the CSI in step 201) is CSI determined based on the first reference signal.

A method for determining CSI by the first device may include at least one of the following: a model-based CSI determining method; a codebook-based CSI determining method.

Optionally, the first reference signal is channel state information reference signal (Channel State Information Reference Signal, CSI-RS).

As an optional implementation, the second device is a base station. As shown in FIG. 3, the first device receives a first reference signal transmitted by a network device (a base station), determines CSI based on the first reference signal, and feeds back quality information corresponding to the CSI to the base station.

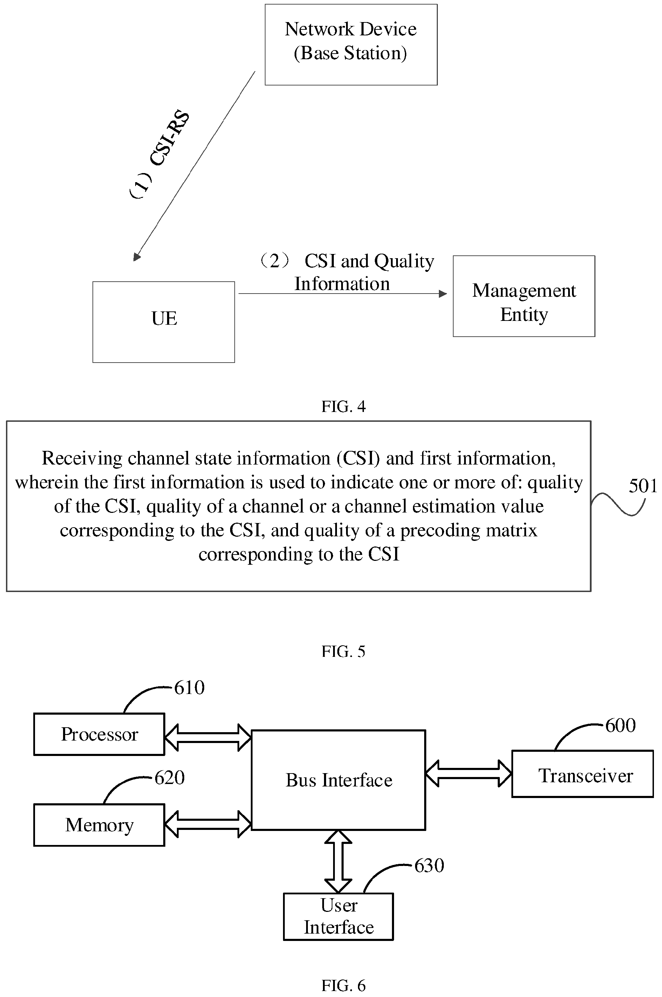

As another optional implementation, the second device is a management entity. As shown in FIG. 4, the first device receives a first reference signal transmitted by a network device (a base station), determines CSI based on the first reference signal, and feeds back quality information corresponding to the CSI to the management entity.

It can be seen that, in FIG. 3, the network device is responsible for data collection, and in FIG. 4, the management entity is responsible for data collection. Although only one terminal is illustrated in FIG. 3 and FIG. 4, one network device or one management entity may also collect data from multiple terminals. That is, there are multiple terminals in a network, and the multiple terminals transmit CSI and quality information to the network device or the management entity. Certainly, there may also be multiple base stations and/or multiple management entities in the network. When both a base station and a management entity exist in the network, it is also possible that both the base station and the management entity collect CSI and quality information. When multiple base stations exist in the network, it is possible that some base stations perform collection of CSI and quality information, and other base stations do not perform collection of CSI and quality information.

Optionally, the determining first information corresponding to channel state information (Channel State Information, CSI) includes:
determining the first information corresponding to the CSI according to configuration information of the first reference signal and/or a second reference signal.

It should be noted that the first reference signal and the second reference signal may be the same, or may be different. For example, the first reference signal is CSI-RS, and the second reference signal is a positioning reference signal. For another example, the first reference signal is CSI-RS used to determine the CSI, and the second reference signal is another CSI-RS used to determine the first information. For another example, the first reference signal is CSI-RS used to determine the CSI, and the second reference signal includes the first reference signal and another CSI-RS used to determine the first information. An example of the another CSI-RS used to determine the first information is CSI-RS within a given time window, or CSI-RS within the given time window that is the same as the first reference signal at least in some configurations. Examples of the some configurations include: number of antenna ports, resource density and/or spatial correlation information.

Optionally, the configuration information of the first reference signal includes configuration information of a resource of the first reference signal and/or configuration information of a resource set of the first reference signal.

Some examples of the configuration information of the resource of the first reference signal and/or the configuration information of the resource set of the first reference signal include one or more of the following information about the resource of the first reference signal and/or the resource set of the first reference signal:
number of antenna ports;
time-domain density;
frequency-domain density;
period;
power information;
pattern.

Optionally, the pattern is a transmission pattern of a resource within a slot and/or a physical resource block (Physical Resource Block, PRB).

339.As an implementation, the determining the first information corresponding to the CSI based on configuration information of the first reference signal and/or the second reference signal includes: determining the first information corresponding to the CSI based on a corresponding relationship between the configuration information of the first reference signal and/or the second reference signal and the first information, where the corresponding relationship may be agreed in a protocol, configured by the second device, configured by a base station, or determined by the UE. For example, the first information corresponding to the CSI is a function of the configuration information of the first reference signal, and the first device determines the first information based on the configuration information of the first reference signal. For example, taking that the configuration information of the first reference signal is a pattern of the first reference signal as an example, the first device obtains the CSI based on the first reference signal, and in a case that the CSI corresponds to the same value, when the pattern of the first reference signal is a first pattern and a second pattern, the first information corresponds to different values. Taking that the configuration information of the first reference signal is a pattern and time-domain density of the first reference signal as an example, the first device obtains the CSI based on the first reference signal, and in a case that the CSI corresponds to the same value, when the pattern and density of the first reference signal are a first combination and a second combination, the first information corresponds to different values. For another example, the first information corresponding to the CSI is a function of a measurement value corresponding to the second signal, and the first device determines the first information based on a measurement quantity of the second signal, where the measurement quantity of the second reference signal is a measurement quantity obtained based on measuring the second reference signal. Optionally, the measurement quantity includes: a channel measurement quantity, for example, RSRP, SINR and/or distribution of a channel, positioning information and/or information used to characterize positioning accuracy, and the like. For example, the first device determines the first information based on the measurement quantity of the second reference signal, and in a case that one or more of the CSI, a quality of the CSI, a quality of a channel corresponding to the CSI or a channel estimation value, and a quality of a precoding matrix corresponding to the CSI correspond to the same value, when the measurement quantity of the second reference signal is a first value and a second value, the first information corresponds to different values respectively. Taking that the first information is quality level information as an example, when the measurement quantity of the second reference signal is the first value, the first information corresponds to a first quality level, and when the measurement quantity of the second reference signal is the second value, the first information corresponds to a second quality level. For another example, when a number of antenna ports or time-domain density included in the configuration information of the first reference signal is within a first numerical value range, the first information corresponding to the CSI determined based on the corresponding relationship is that: a quality level corresponding to the CSI is a first quality level. When the number of antenna ports or the time-domain density included in the configuration information of the first reference signal is within a second numerical value range, the first information corresponding to the CSI determined based on the corresponding relationship is that: the quality level corresponding to the CSI is a second quality level.

Optionally, the configuration information of the first reference signal includes configuration information of signal resources corresponding to the first reference signal. Taking that the first reference signal is CSI-RS as an example, the configuration information of the signal resources corresponding to the first signal is configuration information of CSI-RS resources corresponding to the CSI-RS. Optionally, the configuration information of the first reference signal includes configuration information of signal resource sets corresponding to the first reference signal. Taking that the first reference signal is CSI-RS as an example, the configuration information of the signal resource sets corresponding to the first signal is configuration information of CSI-RS resource sets corresponding to the CSI-RS.

Optionally, the first reference signal is a reference signal used to determine the CSI.

Optionally, the configuration information of the first reference signal includes information for configuring one or more of the following: number of antenna ports of the first reference signal; time-domain density of the first reference signal; frequency-domain density of the first reference signal; pattern of the first reference signal. Optionally, the configuration information of the first reference signal is configuration information transmitted by the second device.

Optionally, the configuration information of the first reference signal includes configuration information of signal resources corresponding to the first reference signal. Optionally, the configuration information of the first reference signal includes information for configuring one or more of the following: number of antenna ports of signal resources corresponding to the first reference signal; time-domain density of signal resources corresponding to the first reference signal; frequency-domain density of signal resources corresponding to the first reference signal; pattern of signal resources corresponding to the first reference signal. Taking that the first reference signal is CSI-RS as an example, the configuration information of the signal resources corresponding to the first signal includes configuration information of CSI-RS resources corresponding to the CSI-RS.

Optionally, the configuration information of the first reference signal includes configuration information of signal resource sets corresponding to the first reference signal. Optionally, the configuration information of the first reference signal includes information for configuring one or more of the following corresponding to the signal resource sets corresponding to the first reference signal: number of antenna ports; time-domain density; frequency-domain density; pattern. Taking that the first reference signal is CSI-RS as an example, the configuration information of the signal resource sets corresponding to the first signal is configuration information of CSI-RS resource sets corresponding to the CSI-RS.

Optionally, the first information includes at least one of the following:
channel quality information;
channel information;
quality level information;
information;
reference signal information corresponding to the CSI;
position information of the first device. Optionally, the position information includes an absolute position of the first device or a relative position of the first device;
speed information of the first device, where the speed information is information used to indicate a speed of the first device. Optionally, the speed information is index information or identification information, and the speed of the first device can be determined by table lookup or searching a corresponding relationship based on the speed information of the first device. Optionally, the speed information may be Doppler-related information, and/or time-domain-related information, and the like.

In the embodiments of the present disclosure, a position of the first device can be determined based on the position information, and then the first information can be determined based on the position of the first device. For example, when a UE is located in a certain area, a quality corresponding to the CSI is relatively good, and when the UE is located in another area, the quality corresponding to the CSI is relatively poor. For another example, if the UE is located outdoors and within a certain distance range from a base station, performance of CSI measurement is relatively good. If the UE is located indoors or at a cell edge, due to relatively large loss or relatively large interference, measurement of CSI by the UE may be inaccurate, and thus the quality corresponding to the CSI is relatively poor.

In addition, in the embodiments of the present disclosure, the first information of the CSI can also be indicated based on the speed information. For example, the lower the speed of the first device, the better the quality corresponding to the CSI may be considered.

In the embodiments of the present disclosure, within different speed ranges and/or different position ranges, the same channel quality information or channel information and the like may correspond to different quality levels.

Optionally, the channel quality information includes at least one of the following:
A1: a signal-to-interference-noise ratio (Signal-to-Interference-Noise Ratio, SINR) or a signal-to-noise ratio (Signal-to-Noise Ratio, SNR);
A2: reference signal received power (Reference Signal Received Power, RSRP);
A3: channel quality indicator (Channel Quality Indicator, CQI).

For the above item A1, at least one of the following may be specifically included:
L1-SINR/L1-SNR;
L3-SINR/L3-SNR.

Optionally, the SINR/SNR is SINR/SNR determined based on a channel estimation value, so that quality of the channel estimation value can be determined based on the SINR/SNR.

Optionally, the L1-SINR includes a linear average value of a signal to interference plus noise ratio of resource elements (Resource Elements, RE) carrying a reference signal. Optionally, the reference signal includes the first reference signal and/or the second reference signal. Optionally, the L1-SNR includes a linear average value of a signal to noise ratio of resource elements (Resource Elements, RE) carrying a reference signal. Optionally, the reference signal includes the first reference signal and/or the second reference signal.

Optionally, the L3-SINR/L3-SNR includes a higher-layer filtered L3-SINR/L3-SNR. The higher-layer filtered SINR/higher-layer filtered SNR may be a higher-layer filtered SINR/higher-layer filtered SNR determined based on at least one L1-SINR/L1-SNR. The higher-layer filtered SINR/higher-layer filtered SNR may also be described as a higher-layer SINR/higher-layer SNR or a filtered SINR/filtered SNR. For example, when the reference signal is periodic CSI-RS, a terminal device may determine the higher-layer filtered SINR/higher-layer filtered SNR based on CSI-RS transmissions in multiple periods.

Optionally, a manner for obtaining a higher-layer filtered SINR/a higher-layer filtered SNR may be implemented by using an L3 filtering manner. The L3 filtering manner is as follows (L1-SINR/L1-SNR is a measurement quantity ***M*ₙ** in the following expression):
${F}_{n} = \left(1-a\right) * {F}_{n - 1} + a * {M}_{n} ;$

In the formula, ***M*ₙ** is a latest measurement result received from a physical layer, and ***n*** is an integer greater than or equal to 1; ***F*ₙ** is an updated filtered measurement result (for example, the higher-layer filtered SINR/higher-layer filtered SNR in the present disclosure); ***F*ₙ₋₁** is a previous filtered measurement result, where ***F*₀** is set to ***M*₁** (that is, a first measurement result received from the physical layer); for a NR measurement object (MeasObjectNR), ***a*** = 1/2^{(***ki***/4)}, where ***kᵢ*** is a filtering coefficient of a corresponding measurement quantity of an *i*-th NR quantity configuration (QuantityConfigNR) in a NR measurement quantity configuration list (quantityConfigNR-List), and *i* is indicated by a measurement quantity configuration index (quantityConfigIndex) in MeasObjectNR; for other measurements, ***a*** = 1/2^{(***k***/4)}, where ***k*** is a filtering coefficient of a corresponding measurement quantity received in a quantity configuration (quantityConfig); for a Universal Terrestrial Radio Access Frequency Division Duplex (Universal Terrestrial Radio Access Frequency Division Duplex, UTRA-FDD) system, ***a*** = 1/2^{(***k***/4)}, where ***k*** is a filtering coefficient of a corresponding measurement quantity received in a UTRA-FDD quantity configuration (quantityConfigUTRA-FDD) in QuantityConfig.

Optionally, the SINR/SNR is SINR/SNR determined based on a precoding matrix or a channel matrix corresponding to first CSI, so that quality of a channel or a precoding matrix corresponding to the CSI can be determined based on the SINR/SNR.

For the above item A2, at least one of the following may be specifically included:
L1-RSRP;
L3-RSRP.

Optionally, the RSRP is RSRP determined based on a channel estimation value, so that quality of the channel estimation value can be determined based on the RSRP.

Optionally, the RSRP is RSRP determined based on the CSI, for example, RSRP determined by using first CSI as a precoding matrix, so that quality of the CSI can be determined based on the RSRP.

Optionally, the L3-RSRP includes a higher-layer filtered L3-RSRP. The higher-layer filtered L3-RSRP may be a higher-layer filtered L3-RSRP determined based on at least one L3-RSRP. The higher-layer filtered L3-RSRP may also be described as a higher-layer L3-RSRP or a filtered L3-RSRP. For example, when a reference signal is periodic CSI-RS, a terminal device may determine the higher-layer filtered L3-RSRP based on CSI-RS transmissions in multiple periods.

One manner for obtaining the higher-layer filtered L3-RSRP may be an L3 filtering manner. The L3 filtering manner is as follows (L1-RSRP is a measurement quantity ***M*ₙ** in the following formula):
${F}_{n} = \left(1-a\right) * {F}_{n - 1} + a * {M}_{n} ;$

In the formula, ***M*ₙ** is a latest measurement result received from a physical layer, and **n** is an integer greater than or equal to 1; ***F*ₙ** is an updated filtered measurement result (for example, the higher-layer filtered RSRP in the present disclosure); ***F*ₙ₋₁** is a previous filtered measurement result, where ***F*₀** is set to ***M*₁** (that is, a first measurement result received from the physical layer); for a New Radio measurement object (MeasObjectNR), ***α*** = 1/2^{(*ki*/4)}*,* where ***kᵢ*** is a filtering coefficient of a corresponding measurement quantity of an *i*-th NR quantity configuration (QuantityConfigNR) in a NR measurement quantity configuration list (quantityConfigNR-List), and *i* is indicated by a measurement quantity configuration index (quantityConfigIndex) in MeasObjectNR; for other measurements, ***α*** = 1/2^{(*k*/4)}*,* where ***k*** is a filtering coefficient of a corresponding measurement quantity received in quantityConfig; for a Universal Terrestrial Radio Access Frequency Division Duplex (UTRA-FDD) system, ***α*** = 1/2^{(*k*/4)}*,* where ***k*** is a filtering coefficient of a corresponding measurement quantity received in a UTRA-FDD measurement quantity configuration (quantityConfigUTRA-FDD) in QuantityConfig.

For the above item A3, the CQI may be CQI determined based on the CSI, so that quality of the CSI can be determined based on the CQI.

Optionally, the channel information includes information used to indicate that a channel corresponds to at least one of the following:
delay spread. Optionally, the delay spread is delay spread of a channel corresponding to the CSI;
angle spread. Optionally, the angle spread is angle spread of the channel corresponding to the CSI;
mean delay. Optionally, the mean delay is mean delay of the channel corresponding to the CSI;
Doppler shift. Optionally, the Doppler shift is Doppler shift of the channel corresponding to the CSI;
Doppler spread. Optionally, the Doppler spread is Doppler spread of the channel corresponding to the CSI;
mean square error (Mean Square Error, MSE). Optionally, the MSE is MSE of the channel corresponding to the CSI, for example, MSE between a measurement value and a reported value of each resource element (Resource Element, RE);
normalized mean square error (Normalized Mean Square Error, NMSE). Optionally, the NMSE is NMSE of the channel corresponding to the CSI, for example, NMSE between a measurement value and a reported value of each RE;
minimum mean square error (Minimum Mean Square Error, MMSE);
channel statistics, where the channel statistics include statistics obtained by statistically processing a channel based on multiple moments or multiple reference signals. Optionally, the multiple moments refer to transmission moments of multiple first reference signals, and the statistics include one or more of delay spread, angle spread, mean delay, Doppler shift, and Doppler spread. Optionally, the multiple first reference signals correspond to the same signal resource or different signal resources;
distribution information of a channel, for example, a distribution type satisfied by a channel envelope, a mean value, a variance, and the like. For another example, a probability density function (Probability Density Function, PDF) distribution corresponding to the channel.

Optionally, the quality level information includes at least one of the following:
quality level of the CSI;
quality level of a channel estimation value corresponding to the CSI;
quality level of a precoding matrix corresponding to the CSI.

As an optional implementation, the first device and the second device pre-agree a division manner of quality levels. For example, the second device indicates a quality level table for the first device, the first device performs channel estimation by using a first reference signal corresponding to the CSI, and determines a quality level of a channel estimation value corresponding to the CSI based on quality of the channel estimation value and the quality level table. For another example, the second device indicates a quality level table for the first device, and the first device determines a quality level corresponding to the CSI based on the quality level table. For another example, the second device indicates value ranges corresponding to multiple level qualities for the first device, and the first device determines a quality level based on the value ranges.

Optionally, the error information includes at least one of the following:
error information of the CSI;
error information of a channel corresponding to the CSI or a channel estimation value;
error information of a precoding matrix corresponding to the CSI.

Optionally, the error information includes at least one of the following:
B1: distance error;
B2: MSE, NMSE, or minimum mean square error (Minimum Mean Square Error, MMSE);
B3: error information of the CQI;
B4: error information of channel statistics.

For the above item B1:
Optionally, the distance error includes error of a Euclidean distance;
Optionally, the distance error may include a distance of the CSI relative to reference CSI, where the reference CSI may be indicated by a base station or determined by a terminal. Optionally, the reference CSI is a statistic;
Optionally, the distance error is a distance of a channel estimation value corresponding to the CSI relative to a reference channel, where the reference channel may be indicated by a base station or determined by a terminal. Optionally, the reference channel is a statistic;
Optionally, the distance error is a distance of a precoding matrix corresponding to the CSI relative to a reference matrix, where the reference matrix may be indicated by a base station or determined by a terminal, optionally, the reference matrix is a statistic.

For the above item B2:
optionally, the MSE/NMSE/MMSE is MSE/NMSE/MMSE corresponding to the CSI;
optionally, the MSE/NMSE/MMSE is MSE/NMSE/MMSE of a precoding matrix corresponding to the CSI;
optionally, the MSE/NMSE/MMSE is MSE/NMSE/MMSE of a channel corresponding to the CSI (or a channel estimation value);
as an implementation, the MSE/NMSE/MMSE is MSE/NMSE/MMSE determined based on a channel (or a channel estimation value)/CSI at multiple frequency-domain positions;
as an implementation, the MSE/NMSE/MMSE is MSE/NMSE/MMSE determined based on a channel (or a channel estimation value)/CSI at multiple time-domain positions;
as an implementation, the MSE/NMSE/MMSE is MSE/NMSE/MMSE determined based on a channel (or a channel estimation value)/CSI at multiple time-domain and frequency-domain positions;
optionally, the MSE/NMSE/MMSE is MSE/NMSE/MMSE between a measurement value and a reported value at each time-domain and/or frequency-domain position. Optionally, the measurement value and the reported value include but are not limited to: a channel estimation value, a precoding matrix and/or CSI, and the like.

Optionally, the MSE/NMSE/MMSE is MSE/NMSE/MMSE determined by the UE based on the CSI and multiple CSI before and/or after the CSI;
Optionally, the MSE/NMSE/MMSE is MSE/NMSE/MMSE determined by the UE based on the CSI and multiple channel estimation values before and/or after the CSI;
It should be noted that the above "before and/or after" is determined based on a transmission time of the CSI, or determined based on a calculation time of the CSI, or determined based on a transmission time or a reception time of a first reference signal corresponding to the CSI.

For the above item B4:
error information of channel statistics may be error information of one or more of the following statistics:
delay spread;
angle spread;
mean delay;
Doppler shift;
Doppler spread.

Optionally, the error information is error information determined based on one or more of a channel estimation value, reference signal information corresponding to the CSI, a UE position, distribution of a channel, and the like.

Optionally, the reference signal information corresponding to the CSI includes at least one of the following:
time-domain density of a first reference signal corresponding to the CSI;
frequency-domain density of the first reference signal corresponding to the CSI;
pattern of the first reference signal corresponding to the CSI.

Optionally, the reference signal information corresponding to the CSI includes reference signal information of the first reference signal.

Optionally, the position information includes at least one of the following:
reference signal time difference (Reference Signal Time Difference, RSTD);
reference signal received power RSRP;
relative time difference (Relative Time Difference, RTD), where the RTD represents a delay difference between multipaths of a measured cell. For example, if (P) paths are detected, (P-1) RTDs may be reported, a value of (P) may be configured by a network side, and the second device may position the first device based on the RTD;
SNR or SINR;
transmission-reception time difference of the first device;
time of arrival (Time of Arrival, TOA) measurement value;
positioning reference signal (Positioning Reference Signal, PRS) resource ID or PRS resource set ID;
angle information;
time stamp associated with a measurement value of the first device. Optionally, the time stamp includes a system frame number and/or a slot number;
position index.

In the embodiments of the present disclosure, first information corresponding to channel state information (CSI) is determined, where the first information is used to indicate one or more of quality of the CSI, quality of a channel or a channel estimation value corresponding to the CSI, and quality of a precoding matrix corresponding to the CSI; and the CSI and the first information are transmitted. Thus, the second device can determine the quality of the CSI based on the first information, avoid using low-quality CSI for performance monitoring or AI/ML model training, and thus effectively improve performance quality of performance monitoring or an AI/ML model.

Embodiments are described below in conjunction with embodiments to illustrate the information processing method of the present disclosure.
(1) a base station transmits a first reference signal to a UE (hereinafter, the first reference signal is described by taking CSI-RS as an example).
(2) the UE receives CSI-RS transmitted by the base station, and determines CSI based on the CSI-RS.

Optionally, a manner for the UE to determine CSI based on CSI-RS includes: the UE performs channel estimation based on CSI-RS to obtain a channel estimation value (H), and the UE obtains CSI based on (H). Optionally, the CSI includes one or more of the following:
precoding matrix information;
number of transmission layers information;
channel matrix information.

In the embodiments of the present disclosure, the CSI may be determined based on the channel estimation value H by using the following methods:
method 1: the UE determines one or more of a precoding matrix and a number of transmission layers based on H, and determines CSI based on the one or more of the precoding matrix and the number of transmission layers. One method for the UE to determine the precoding matrix based on H is that the UE performs eigenvalue decomposition on H to obtain an eigenvector, and searches a codebook for a precoding matrix closest to the eigenvector as the precoding matrix for determining CSI. Another method for the UE to determine the precoding matrix based on H is that the UE projects H onto some basis vectors, and determines the precoding matrix based on a projection value.
method 2: the UE quantizes the channel estimation value H to obtain channel matrix information.

Optionally, the CSI is ground-truth CSI. The ground-truth CSI is CSI for one or more of performance monitoring, model training, and model updating. Optionally, the performance monitoring includes one or more of model monitoring and functionality monitoring.

(3) the UE determines first information corresponding to the CSI, where the first information is used to indicate one or more of quality of the CSI, quality of a channel or a channel estimation value corresponding to the CSI, and quality of a precoding matrix corresponding to the CSI.

Optionally, the UE determines the first information corresponding to the CSI based on one or more of configuration information of CSI-RS transmitted by the base station and a reference signal. Optionally, the reference signal includes a positioning reference signal. Optionally, the reference signal is CSI-RS. Optionally, the reference signal includes CSI-RS (a first reference signal) in step (1) on the UE side and/or other CSI-RS (a second reference signal).

It should be noted that, in the embodiments of the present disclosure, a step in which the UE determines the first information and a step in which the UE determines the CSI are not limited to an execution order. That is, the UE may determine the first information before determining the CSI, may determine the CSI before determining the first information, or may determine the first information and the CSI simultaneously.

As an implementation, that the UE determines the first information and/or the CSI based on the first reference signal includes:
the UE determines a channel estimation value based on the first reference signal (the channel estimation value may be in a form of one or more matrices); and determines the first information and/or the CSI based on the channel estimation value.

As an implementation, the UE determines the first information based on one or more of quality of the CSI, quality of a channel or a channel estimation value corresponding to the CSI, and quality of a precoding matrix corresponding to the CSI.

(4) the UE transmits the CSI and the first information to a second device.

Optionally, the second device may be a management entity, for example, an entity dedicated to model training and/or model monitoring. The second device may also be a base station, or UE different from the foregoing UE. Optionally, the second device is a server having one or more of model training, model monitoring, and/or data collection functions.

Optionally, the first information includes at least one of the following:
channel quality information;
channel information;
quality level information;
error information;
reference signal information corresponding to the CSI;
position information of the first device;
speed information of the first device.

Wherein, the channel quality information includes at least one of the following:
SINR/SNR, such as L1-SINR/L1-SNR, or L3-SINR/L3-SNR. Optionally, one L1-SINR corresponds to one CSI. Optionally, L1-SINR corresponds to CSI in a one-to-one manner. Optionally, the UE reports multiple CSI, and some CSI has corresponding L1-SINR, while some CSI has no corresponding L1-SINR; optionally, one L3-SINR corresponds to CSI at multiple time instants. Optionally, the SINR/SNR is determined based on a channel estimation value corresponding to the first reference signal; optionally, the SINR/SNR is jointly determined based on channel estimation values of the first reference signal and some other signals; optionally, the SINR/SNR is SINR/SNR determined based on reference signals within a given time window. Optionally, the SINR/SNR is SINR/SNR determined based on a channel estimation value H; optionally, the SINR/SNR is SINR/SNR determined based on a precoding matrix or a channel matrix corresponding to the CSI.

RSRP, such as L1-RSRP and/or L3-RSRP. Optionally, one L1-RSRP corresponds to one CSI. Optionally, L1-RSRP corresponds to CSI in a one-to-one manner. Optionally, the UE reports multiple CSI, and some CSI has corresponding L1-RSRP, while some CSI has no corresponding L1-RSRP. Optionally, one L3-RSRP corresponds to CSI at multiple time instants. Optionally, the RSRP is determined based on a channel estimation value corresponding to the first reference signal; optionally, the RSRP is jointly determined based on channel estimation values of the first reference signal and some other signals; optionally, the RSRP is RSRP determined based on reference signals within a given time window. Optionally, the RSRP is RSRP determined based on a channel estimation value H; optionally, the RSRP is RSRP determined based on a precoding matrix or a channel matrix corresponding to the CSI.

CQI; optionally, the CQI is CQI determined based on a precoding matrix or a channel matrix corresponding to the CSI. Optionally, the UE determines a channel estimation value based on the first reference signal, determines a precoding matrix and/or a channel matrix based on the channel estimation value, and then determines CSI and CQI based on the precoding matrix and/or the channel matrix.

Optionally, the channel information is determined in the following manner: the UE performs channel estimation based on the first reference signal, determines a precoding matrix and/or a channel matrix based on a channel estimation value corresponding to the channel estimation, and then determines the channel information based on the precoding matrix and/or the channel matrix.

Optionally, the channel information includes information for indicating that a channel corresponds to at least one of the following:
delay spread; optionally, delay spread of a channel corresponding to the CSI;
angle spread; optionally, angle spread of the channel corresponding to the CSI;
mean delay; optionally, mean delay of the channel corresponding to the CSI;
Doppler shift; optionally, Doppler shift of the channel corresponding to the CSI;
Doppler spread; optionally, Doppler spread of the channel corresponding to the CSI;
mean square error (Mean Square Error, MSE); optionally, MSE of the channel corresponding to the CSI, for example, MSE between a measured value and a reported value of each resource element (Resource Element, RE);
normalized mean square error (Normalized Mean Square Error, NMSE); optionally, NMSE of the channel corresponding to the CSI, for example, NMSE between a measured value and a reported value of each RE;
minimum mean square error MMSE;
channel statistics, where the channel statistics includes statistics obtained by performing channel statistics based on multiple time instants or multiple reference signals. Optionally, the multiple time instants refer to transmission time instants of multiple first reference signals, and the statistics includes one or more of delay spread, angle spread, mean delay, Doppler shift, and Doppler spread. Optionally, the multiple first reference signals correspond to a same signal resource or different signal resources;
channel distribution information, for example, a distribution type, a mean, a variance, etc. followed by a channel envelope. For another example, a probability density function (Probability Density Function, PDF) distribution corresponding to the channel.

For the foregoing channel statistics, optionally, the channel statistics is determined based on a channel estimation value corresponding to the first reference signal; optionally, the channel statistics is jointly determined based on channel estimation values of the first reference signal and some other signals. Optionally, the channel statistics is determined based on reference signals within a given time window.

For the foregoing channel distribution information, optionally, the channel distribution information is determined based on a channel estimation value corresponding to the first reference signal; optionally, the channel distribution information is jointly determined based on channel estimation values of the first reference signal and some other signals. Optionally, the channel distribution information is determined based on reference signals within a given time window.

Optionally, the error information is error information determined based on one or more of a channel estimation value, reference signal information corresponding to the CSI, a UE position, a channel distribution, and the like. For example, there is two kinds of reference signal information corresponding to the CSI, such that corresponding error information is different when other conditions are the same, and the UE is required to determine the error information based on the reference signal information corresponding to the CSI.

The foregoing quality level information, error information, reference signal information corresponding to the CSI, position information of the first device, and speed information of the first device have been described in detail above, and details are not repeated herein.
(5) the second device receives the first information and the CSI.
(6) optionally, the second device determines data for performance monitoring and/or model training based on the CSI and the first information.

Optionally, that the second device determines the data for performance monitoring and/or model training based on the CSI and the first information includes:
in a case that the second device determines, based on the first information, that one or more of quality of the CSI, quality of a channel or a channel estimation value corresponding to the CSI, and quality of a precoding matrix corresponding to the CSI satisfies a preset quality condition, determining the CSI as the data for performance monitoring and/or model training.

Optionally, the model in the embodiments of the present disclosure includes an AI/ML model.

In the embodiments of the present disclosure, first information corresponding to CSI is determined, where the first information is used to indicate one or more of quality of the CSI, quality of a channel or a channel estimation value corresponding to the CSI, and quality of a precoding matrix corresponding to the CSI, and the CSI and the first information are transmitted. Therefore, the second device can determine the quality of the CSI based on the first information, avoid performing performance monitoring or AI/ML model training by using low-quality CSI, and thus can effectively improve performance quality of performance monitoring or the AI/ML model.

As shown in FIG. 5, an embodiment of the present disclosure further provides an information processing method, performed by a second device, and the method includes:
step 501: receiving CSI and first information, where the first information is used to indicate one or more of quality of the CSI, quality of a channel or a channel estimation value corresponding to the CSI, and quality of a precoding matrix corresponding to the CSI.

Optionally, the second device may be a base station, or may be a network device such as a management entity different from the base station. For example, the second device may be an entity dedicated to model training and/or model monitoring functions. The second device may also be a base station, or UE different from the foregoing UE. Optionally, the second device is a server having one or more of model training, model monitoring, and/or data collection functions.

Optionally, the CSI includes at least one of the following:
CQI;
PMI;
CRI;
SSBRI;
LI;
RI;
L1-RSRP;
L1-SINR;
Capability Set Index.

In the embodiments of the present disclosure, CSI and first information are received, where the first information is used to indicate one or more of quality of the CSI, quality of a channel or a channel estimation value corresponding to the CSI, and quality of a precoding matrix corresponding to the CSI. Therefore, the second device can determine the quality of the CSI based on the first information, avoid performing performance monitoring or AI/ML model training by using low-quality CSI, and thus can effectively improve performance quality of performance monitoring or the AI/ML model.

Optionally, the method in the embodiments of the present disclosure further includes:
determining data for performance monitoring or model training based on the CSI and the first information.

Optionally, that the second device determines the data for performance monitoring and/or model training based on the CSI and the first information includes:
in a case that the second device determines, based on the first information, that one or more of quality of the CSI, quality of a channel or a channel estimation value corresponding to the CSI, and/or quality of a precoding matrix corresponding to the CSI satisfies a preset quality condition, determining the CSI as the data for performance monitoring and/or model training.

Optionally, the model in the embodiments of the present disclosure includes an AI/ML model.

Optionally, the method in the embodiments of the present disclosure further includes at least one of the following:
transmitting a first reference signal and/or a second reference signal;
transmitting configuration information of the first reference signal.

As an implementation, in a case that the second device is a base station, transmitting a first reference signal and/or a second reference signal, and/or transmitting configuration information of the first reference signal.

Optionally, the first information includes at least one of the following:
channel quality information;
channel information;
quality level information;
error information;
reference signal information corresponding to the CSI;
position information of the first device; optionally, the position information includes an absolute position of the first device or a relative position of the first device;
speed information of the first device. The speed information is information for indicating a speed of the first device. Optionally, the speed information is index information, and the speed of the first device can be determined by table lookup or by searching a correspondence relationship based on the speed information. Optionally, the speed information may be Doppler-related information and/or time-domain-related information.

In the embodiments of the present disclosure, a position of the first device can be determined based on the foregoing position information, and the first information can further be determined based on the position of the first device. For example, when the UE is located in a region, quality of CSI corresponding to the UE is relatively good, and when the UE is located in another region, quality of CSI corresponding to the UE is relatively poor. For another example, if the UE is located outdoors and within a certain range from the base station, CSI measurement performance is relatively good. If the UE is located indoors or at a cell edge, due to relatively large loss or relatively large interference, measurement of CSI by the UE may be inaccurate, and thus quality of CSI is relatively poor.

In addition, in the embodiments of the present disclosure, the first information of the CSI can also be indicated based on the foregoing speed information. For example, the lower the speed of the first device, the better the quality of the CSI may be considered.

In the embodiments of the present disclosure, in different speed ranges and/or different position ranges, same channel quality information or channel information may correspond to same or different quality levels.

Optionally, the channel quality information includes at least one of the following:
A1: signal-to-interference-noise ratio (Signal-to-Interference-Noise Ratio, SINR) or signal-to-noise ratio (Signal-to-Noise Ratio, SNR);
A2: reference signal received power (Reference Signal Received Power, RSRP);
A3: channel quality indicator (Channel Quality Indicator, CQI).

For the foregoing item A1, the item A1 includes at least one of the following:
L1-SINR/L1-SNR;
L3-SINR/L3-SNR.

Optionally, the SINR/SNR is SINR/SNR determined based on a channel estimation value, such that quality of the channel estimation value can be determined based on the SINR/SNR.

Optionally, the L1-SINR includes a linear average value of signal to interference plus noise ratio of resource elements (Resource Elements, RE) carrying a reference signal. Optionally, the reference signal includes a first reference signal and/or a second reference signal. Optionally, the L1-SNR includes a linear average value of signal to noise ratio of RE carrying a reference signal. Optionally, the reference signal includes a first reference signal and/or a second reference signal.

Optionally, the L3-SINR/L3-SNR includes higher-layer filtered L3-SINR/L3-SNR. The higher-layer filtered SINR/higher-layer filtered SNR may be higher-layer filtered SINR/higher-layer filtered SNR determined based on higher-layer filtering of at least one L1-SINR/L1-SNR. The higher-layer filtered SINR/higher-layer filtered SNR may also be described as higher-layer SINR/higher-layer SNR or filtered SINR/filtered SNR. For example, when the reference signal is periodic CSI-RS, a terminal device can determine higher-layer filtered SINR/higher-layer filtered SNR based on CSI-RS transmissions in multiple periods.

A manner of obtaining higher-layer filtered SINR/higher-layer filtered SNR may be adopting L3 filtering. The L3 filtering is as follows (L1-SINR/L1-SNR is measurement quantity ***M*ₙ** in the following formula):
${F}_{n} = \left(1-a\right) * {F}_{n - 1} + a * {M}_{n} ;$
wherein, ***M*ₙ** is a latest measurement result received from a physical layer, and **n** is an integer greater than or equal to 1; ***F*ₙ** is an updated filtered measurement result (for example, higher-layer filtered SINR/higher-layer filtered SNR in the present disclosure); ***F*ₙ₋₁** is a previous filtered measurement result, where ***F*₀** is set to ***M*₁** (that is, a first measurement result received from the physical layer); for MeasObjectNR (NR measurement object), ***a*** = 1/2^{(***ki***/4)}, where ***kᵢ*** is a filtering coefficient of a corresponding measurement quantity of the *i*-th QuantityConfigNR (NR quantity configuration) in quantityConfigNR-List (NR quantity configuration list), and *i* is indicated by quantityConfigIndex (quantity configuration index) in MeasObjectNR; for other measurements, ***a*** = 1/2^{(***k***/4)}, where ***k*** is a filtering coefficient of a corresponding measurement quantity received in quantityConfig (quantity configuration); for a universal terrestrial radio access frequency division duplex (UTRA-FDD) system, ***a*** = 1/2^{(***k***/4)}, where ***k*** is a filtering coefficient of a corresponding measurement quantity received in quantityConfigUTRA-FDD (UTRA-FDD quantity configuration) in QuantityConfig (quantity configuration).

Optionally, the SINR/SNR is SINR/SNR determined based on a precoding matrix or a channel matrix corresponding to first CSI, such that quality of a channel or a precoding matrix corresponding to the CSI can be determined based on the SINR/SNR.

For the foregoing item A2, the item A2 includes at least one of the following:
L1-RSRP;
L3-RSRP.

Optionally, the RSRP is RSRP determined based on a channel estimation value, such that quality of the channel estimation value can be determined based on the RSRP.

Optionally, the RSRP is RSRP determined based on the CSI. For example, the RSRP is RSRP determined by using first CSI as a precoding matrix, such that quality of the CSI can be determined based on the RSRP.

Optionally, the L3-RSRP includes higher-layer filtered L3-RSRP. The higher-layer filtered L3-RSRP may be higher-layer filtered L3-RSRP determined based on higher-layer filtering of at least one L3-RSRP. The higher-layer filtered L3-RSRP may also be described as higher-layer L3-RSRP or filtered L3-RSRP. For example, when the reference signal is periodic CSI-RS, a terminal device can determine higher-layer filtered L3-RSRP based on CSI-RS transmissions in multiple periods.

A manner of obtaining higher-layer filtered L3-RSRP may be adopting L3 filtering. The L3 filtering is as follows (L1-RSRP is measurement quantity ***M*ₙ** in the following formula):
${F}_{n} = \left(1-a\right) * {F}_{n - 1} + a * {M}_{n} ;$
wherein, ***M*ₙ** is a latest measurement result received from a physical layer, and n is an integer greater than or equal to 1; ***F*ₙ** is an updated filtered measurement result (for example, higher-layer filtered RSRP in the present disclosure); ***F*ₙ₋₁** is a previous filtered measurement result, where ***F*₀** is set to ***M*₁** (that is, a first measurement result received from the physical layer); for MeasObjectNR (NR measurement object), ***α*** = 1/2^{(*ki*/4)}, where ***kᵢ*** is a filtering coefficient of a corresponding measurement quantity of the *i*-th QuantityConfigNR (NR quantity configuration) in quantityConfigNR-List (NR quantity configuration list), and *i* is indicated by quantityConfigIndex (quantity configuration index) in MeasObjectNR; for other measurements, ***a*** = 1/2^{(***k***/4)}, where ***k*** is a filtering coefficient of a corresponding measurement quantity received in quantityConfig (quantity configuration); for a universal terrestrial radio access frequency division duplex (UTRA-FDD) system, ***a*** = 1/2^{(***k***/4)}, where ***k*** is a filtering coefficient of a corresponding measurement quantity received in quantityConfigUTRA-FDD (UTRA-FDD quantity configuration) in QuantityConfig (quantity configuration).

For the foregoing item A3, the CQI is CQI determined based on the CSI, such that quality of the CSI can be determined based on the CQI. Optionally, the channel information includes information for indicating that a channel corresponds to at least one of the following:
delay spread; optionally, delay spread of the channel corresponding to the CSI;
angle spread; optionally, angle spread of the channel corresponding to the CSI;
mean delay; optionally, mean delay of the channel corresponding to the CSI;
Doppler shift; optionally, Doppler of the channel corresponding to the CSI;
Doppler spread; optionally, Doppler spread of the channel corresponding to the CSI;
mean square error (MSE); optionally, MSE of the channel corresponding to the CSI, for example, MSE between a measurement value and a reported value of each resource element (RE);
normalized mean square error (NMSE); optionally, NMSE of the channel corresponding to the CSI, for example, NMSE between a measurement value and a reported value of each RE;
minimum mean square error (MMSE);
channel statistics, where the channel statistics include statistics obtained by performing channel statistics based on multiple moments or multiple reference signals. Optionally, the multiple moments refer to multiple transmission moments of multiple first reference signals. The statistics include at least one of delay spread, angle spread, mean delay, Doppler shift, and Doppler spread. Optionally, the multiple first reference signals correspond to a same signal resource or different signal resources;
channel distribution information, for example, a distribution type, a mean value, and a variance to which a channel envelope conforms. For another example, probability density function (PDF) distribution corresponding to the channel.

Optionally, the quality level information includes at least one of the following:
a quality level of the CSI;
a quality level of a channel estimation value corresponding to the CSI;
a quality level of a precoding matrix corresponding to the CSI.

As an optional implementation, the first device and the second device pre-agree on a classification manner of quality levels. For example, the second device indicates a quality level table to the first device, the first device performs channel estimation by using a first reference signal corresponding to the CSI, and determines a quality level of a channel estimation value corresponding to the CSI based on the quality of the channel estimation value and the quality level table. For another example, the second device indicates a quality level table to the first device, and the first device determines a quality level of the CSI based on the quality level table. For another example, the second device indicates value ranges corresponding to multiple quality levels to the first device, and the first device determines a quality level based on the value ranges.

Optionally, the error information includes at least one of the following:
error information of the CSI;
error information of a channel or a channel estimation value corresponding to the CSI;
error information of a precoding matrix corresponding to the CSI.

576.Optionally, the error information includes at least one of the following:
B1: distance error;
B2: MSE, NMSE, or minimum mean square error (MMSE);
B3: error information of the CQI;
B4: error information of channel statistics.

For the foregoing item B1:
optionally, the distance error includes an error of an Euclidean distance;
optionally, the distance error includes a distance of the CSI relative to reference CSI, where the reference CSI is indicated by a base station or determined by a terminal, and optionally, the reference CSI is a statistic;
optionally, the distance error is a distance of a channel estimation value corresponding to the CSI relative to a reference channel, where the reference channel is indicated by a base station or determined by a terminal, and optionally, the reference channel is a statistic;
optionally, the distance error is a distance of a precoding matrix corresponding to the CSI relative to a reference matrix, where the reference matrix is indicated by a base station or determined by a terminal, and optionally, the reference matrix is a statistic.

For the foregoing item B2:
optionally, the MSE/NMSE/MMSE is MSE/NMSE/MMSE corresponding to the CSI;
optionally, the MSE/NMSE/MMSE is MSE/NMSE/MMSE of a precoding matrix corresponding to the CSI;
optionally, the MSE/NMSE/MMSE is MSE/NMSE/MMSE of a channel (or a channel estimation value) corresponding to the CSI;
as an implementation, the MSE/NMSE/MMSE is MSE/NMSE/MMSE determined based on channels (or channel estimation values)/CSI at multiple frequency-domain positions;
as an implementation, the MSE/NMSE/MMSE is MSE/NMSE/MMSE determined based on channels (or channel estimation values)/CSI at multiple time-domain positions;
as an implementation, the MSE/NMSE/MMSE is MSE/NMSE/MMSE determined based on channels (or channel estimation values)/CSI at multiple time-domain and frequency-domain positions;
optionally, the MSE/NMSE/MMSE is MSE/NMSE/MMSE between a measurement value and a reported value at each time-domain and/or frequency-domain position. Optionally, the measurement value and the reported value include, but are not limited to: a channel estimation value, a precoding matrix, and/or CSI.

Optionally, the MSE/NMSE/MMSE is MSE/NMSE/MMSE determined by the UE based on the CSI and multiple CSI before and/or after the CSI;
optionally, the MSE/NMSE/MMSE is MSE/NMSE/MMSE determined by the UE based on the CSI and multiple channel estimation values before and/or after the CSI;
it should be noted that the foregoing "before and/or after" is determined based on a transmission time of the CSI, or determined based on a calculation time of the CSI, or determined based on a transmission time or a reception time of a first reference signal corresponding to the CSI.

For the foregoing item B4:
error information of channel statistics may be error information of at least one of the following statistics:
delay spread;
angle spread;
mean delay;
Doppler shift;
Doppler spread.

Optionally, the error information is error information determined based on one or more of a channel estimation value, reference signal information corresponding to the CSI, a UE location, a channel distribution, and the like.

Optionally, the reference signal information corresponding to the CSI includes at least one of the following:
a time-domain density of a first reference signal corresponding to the CSI;
a frequency-domain density of the first reference signal corresponding to the CSI;
a pattern of the first reference signal corresponding to the CSI.

Optionally, the reference signal information corresponding to the CSI includes reference signal information of the first reference signal.

Optionally, the location information includes at least one of the following:
reference signal time difference (RSTD);
reference signal received power (RSRP);
relative time difference (RTD), where the RTD indicates a delay difference between multipath components of a measured cell, for example, if P paths are detected, P-1 RTDs can be reported, P is configurable by a network side, and a second device can position a first device based on the RTD;
SNR or SINR;
a transmit-receive time difference of the first device;
a time of arrival (TOA) measurement value;
a positioning reference signal (PRS) resource ID or a PRS resource set ID;
angle information;
a time stamp associated with a measurement value of the first device, and optionally, the time stamp includes a system frame number and/or a slot number;
a location index.

The foregoing first information has been described in detail in the method embodiment on the first-device side, and details are not repeated herein.

It should be noted that an information determination method executed by the second device is a method corresponding to the information indication method executed by the foregoing first device, and a specific interaction process therebetween has been described in detail in the embodiment on the first-device side, and details are not repeated herein.

As shown in FIG. 6, an information processing apparatus is provided according to an embodiment of the present disclosure, which is applied to a first device (e.g., a terminal) and includes a memory 620, a transceiver 600, and a processor 610;
the memory 620 is configured to store a computer program; the transceiver 600 is configured to transmit and receive data under control of the processor 610; and the processor 610 is configured to read the computer program stored in the memory 620 and execute the following operations:
determine first information corresponding to channel state information (CSI), where the first information is used to indicate one or more of quality of the CSI, quality of a channel or a channel estimation value corresponding to the CSI, and quality of a precoding matrix corresponding to the CSI;
send the CSI and the first information.
wherein, in FIG. 6, a bus architecture may include any number of interconnected buses and bridges, and is specifically linked together by various circuits of one or more processors represented by the processor 610 and a memory represented by the memory 620; the bus architecture may further link together various other circuits, such as peripherals, voltage regulators, and power management circuits, which are well known in the art and therefore will not be further described herein; a bus interface provides an interface; the transceiver 600 may include multiple elements, i.e., including a transmitter and a receiver, and provides units for communicating with various other apparatuses over a transmission medium, and the transmission medium includes a wireless channel, a wired channel, an optical cable, and the like; for different user equipment, a user interface 630 may further be an interface capable of externally connecting or internally connecting required devices, and the connected devices include, but are not limited to, a keypad, a display, a speaker, a microphone, a joystick, and the like.

The processor 610 is responsible for managing the bus architecture and general processing, and the memory 620 may store data used by the processor 610 in performing operations.

Optionally, the processor 610 may be a central processing unit (CPU), an application specific integrated circuit (ASIC), a field-programmable gate array (FPGA), or a complex programmable logic device (CPLD), and the processor may also adopt a multi-core architecture.

The processor is configured to invoke the computer program stored in the memory, so as to execute any one of the methods provided in embodiments of the present disclosure according to obtained executable instructions. The processor and the memory may also be physically arranged separately.

Optionally, the processor further performs the following operations:
receive a first reference signal;
determine the CSI based on the first reference signal.

Optionally, the processor further performs the following operations:
determine first information corresponding to the CSI based on configuration information of the first reference signal and/or a second reference signal.

Optionally, the first information includes at least one of the following:
channel quality information;
channel information;
quality level information;
error information;
reference signal information corresponding to the CSI;
location information of the first device;
velocity information of the first device.

Optionally, the channel quality information includes at least one of the following:
a signal-to-interference-plus-noise ratio (SINR) or a signal-to-noise ratio (SNR);
reference signal received power (RSRP);
a channel quality indicator (CQI).

Optionally, the channel information includes information for indicating that the channel corresponds to at least one of the following:
delay spread;
angle spread;
mean delay;
Doppler shift;
Doppler spread;
mean square error (MSE);
normalized mean square error (NMSE);
minimum mean square error (MMSE);
channel statistics;
distribution information of the channel.

Optionally, the quality level information includes at least one of the following:
a quality level of the CSI;
a quality level of a channel estimation value corresponding to the CSI;
a quality level of a precoding matrix corresponding to the CSI.

Optionally, the error information includes at least one of the following:
error information of the CSI;
error information of a channel or a channel estimation value corresponding to the CSI;
error information of a precoding matrix corresponding to the CSI.

Optionally, the error information includes at least one of the following:
distance error;
MSE, NMSE, or MMSE;
error information of a CQI;
error information of channel statistics.

Optionally, the reference signal information corresponding to the CSI includes at least one of the following:
a time-domain density of a first reference signal corresponding to the CSI;
a frequency-domain density of the first reference signal corresponding to the CSI;
a pattern of the first reference signal corresponding to the CSI.

Optionally, the location information includes at least one of the following:
reference signal time difference (RSTD);
reference signal received power (RSRP);
relative time difference (RTD);
SNR or SINR;
a transmit-receive time difference of the first device;
a time of arrival (TOA) measurement value;
a positioning reference signal (PRS) resource ID or a PRS resource set ID;
angle information;
a time stamp associated with a measurement value of the first device;
a location index.

It should be noted herein that the above apparatus provided in embodiments of the present disclosure is capable of implementing all method steps implemented by the information processing method embodiment applied to the first device, and is capable of achieving the same technical effects, and details of parts identical to those of the method embodiment and beneficial effects will not be repeated herein.

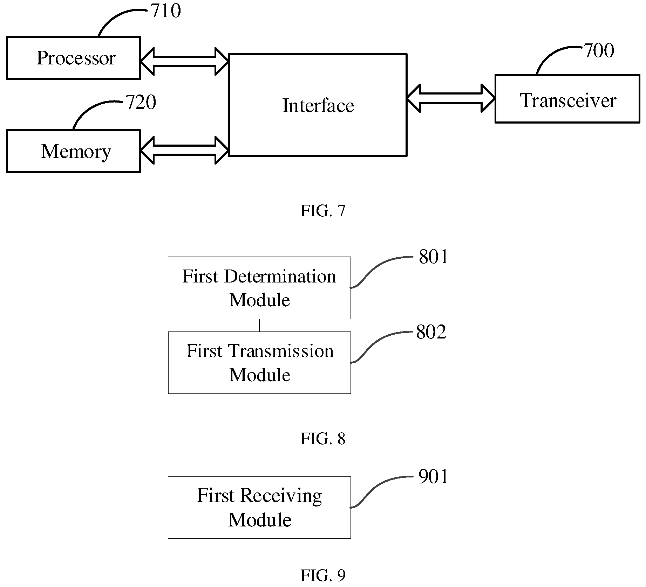

As shown in FIG. 7, embodiments of the present disclosure further provide an information processing apparatus, including a memory 720, a transceiver 700, and a processor 710;
the memory 720 is configured to store a computer program; the transceiver 700 is configured to transmit and receive data under control of the processor; and the processor 710 is configured to read the computer program in the memory and perform the following operations:
receiving channel state information (CSI) and first information, where the first information is used to indicate one or more of a quality of the CSI, a quality of a channel or a channel estimation value corresponding to the CSI, and a quality of a precoding matrix corresponding to the CSI.

Wherein, in FIG. 7, a bus architecture may include any number of interconnected buses and bridges, and is specifically linked together by various circuits of one or more processors represented by the processor 710 and a memory represented by the memory 720; the bus architecture may further link together various other circuits such as peripheral devices, voltage regulators, and power management circuits, which are well known in the art and therefore will not be further described herein; a bus interface provides an interface; the transceiver 700 may include multiple elements, i.e., including a transmitter and a receiver, and provides units for communicating with various other apparatuses over a transmission medium, where the transmission medium includes a wireless channel, a wired channel, an optical cable, and other transmission media; the processor 710 is responsible for managing the bus architecture and general processing, and the memory 720 may store data used by the processor 710 when performing operations.

The processor 710 may be a CPU, an ASIC, an FPGA, or a CPLD, and the processor may also employ a multi-core architecture.

It should be noted herein that the above apparatus provided in embodiments of the present disclosure is capable of implementing all method steps implemented by the information processing method embodiment applied to the second device, and is capable of achieving the same technical effects, and details of parts identical to those of the method embodiment and beneficial effects will not be repeated herein.

As shown in FIG. 8, embodiments of the present disclosure further provide an information processing apparatus, including:
a first determining unit 801, configured to determine first information corresponding to channel state information (CSI), where the first information is used to indicate one or more of a quality of the CSI, a quality of a channel or a channel estimation value corresponding to the CSI, and a quality of a precoding matrix corresponding to the CSI;
a first sending unit 802, configured to send the CSI and the first information.

Optionally, the apparatus in embodiments of the present disclosure further includes:
a second receiving unit, configured to receive a first reference signal;
a second determining unit, configured to determine the CSI based on the first reference signal.

Optionally, the first determining unit is configured to determine the first information corresponding to the CSI based on configuration information of the first reference signal and/or a second reference signal.

Optionally, the first information includes at least one of:
channel quality information;
channel information;
quality level information;
error information;
reference signal information corresponding to the CSI;
location information of the first device;
speed information of the first device.

Optionally, the channel quality information comprises at least one of:
signal-to-interference-plus-noise ratio (SINR) or signal-to-noise ratio (SNR);
reference signal received power (RSRP);
channel quality indicator (CQI).

Optionally, the channel information comprises information for indicating that the channel corresponds to at least one of:
delay spread;
angle spread;
mean delay;
Doppler shift;
Doppler spread;
mean square error (MSE);
normalized mean square error (NMSE);
minimum mean square error (MMSE);
channel statistics;
distribution information of the channel.

Optionally, the quality level information comprises at least one of:
a quality level of the CSI;
a quality level of a channel estimation value corresponding to the CSI;
a quality level of a precoding matrix corresponding to the CSI.

Optionally, the error information comprises at least one of:
error information of the CSI;
error information of a channel or a channel estimation value corresponding to the CSI;
error information of a precoding matrix corresponding to the CSI.

Optionally, the error information comprises at least one of:
distance error;
MSE, NMSE, or minimum mean square error (MMSE);
error information of CQI;
error information of channel statistics.

Optionally, the reference signal information corresponding to the CSI comprises at least one of:
a time-domain density of a first reference signal corresponding to the CSI;
a frequency-domain density of the first reference signal corresponding to the CSI;
a pattern of the first reference signal corresponding to the CSI.

Optionally, the location information comprises at least one of:
reference signal time difference (RSTD);
reference signal received power (RSRP);
relative time difference (RTD);
SNR or SINR;
a transmit-receive time difference of the first device;
a time of arrival (TOA) measurement value;
a positioning reference signal (PRS) resource ID or a PRS resource set ID;
angle information;
a timestamp associated with a measurement value of the first device;
a location index.

It should be noted that the above apparatus provided in the embodiments of the present disclosure can implement all method steps implemented in the above information processing method embodiment applied to the first device, and can achieve the same technical effects; details of parts that are the same as those in the method embodiment and beneficial effects thereof are not repeated herein.

As shown in FIG. 9, the embodiments of the present disclosure further provide an information processing apparatus, comprising:
a first receiving unit 901, configured to receive channel state information (CSI) and first information, wherein the first information is used to indicate one or more of: a quality of the CSI, a quality of a channel or a channel estimation value corresponding to the CSI, and a quality of a precoding matrix corresponding to the CSI.

Optionally, the apparatus in the embodiments of the present disclosure further comprises:
a third determining unit, configured to determine, based on the CSI and the first information, data for performance monitoring or model training.

Optionally, the apparatus in the embodiments of the present disclosure further comprises:
a second sending unit, configured to perform at least one of:
sending a first reference signal and/or a second reference signal;
sending configuration information of the first reference signal.

Optionally, the first information comprises at least one of:
channel quality information;
channel information;
quality level information;
error information;
reference signal information corresponding to the CSI;
location information of a first device;
speed information of the first device.

Optionally, the channel quality information comprises at least one of:
signal-to-interference-noise ratio (SINR) or signal-to-noise ratio (SNR);
reference signal received power (RSRP);
channel quality indicator (CQI).

Optionally, the channel information comprises information for indicating that the channel corresponds to at least one of:
delay spread;
angle spread;
mean delay;
Doppler shift;
Doppler spread;
mean square error (MSE);
normalized mean square error (NMSE);
minimum mean square error (MMSE);
channel statistics;
distribution information of the channel.

Optionally, the quality level information comprises at least one of:
a quality level of the CSI;
a quality level of a channel estimation value corresponding to the CSI;
a quality level of a precoding matrix corresponding to the CSI.

Optionally, the error information comprises at least one of:
error information of the CSI;
error information of a channel or a channel estimation value corresponding to the CSI;
error information of a precoding matrix corresponding to the CSI.

Optionally, the error information comprises at least one of:
a distance error;
MSE, NMSE, or minimum mean square error (MMSE);
error information of CQI;
error information of channel statistics.

Optionally, the reference signal information corresponding to the CSI comprises at least one of:
a time-domain density of a first reference signal corresponding to the CSI;
a frequency-domain density of the first reference signal corresponding to the CSI;
a pattern of the first reference signal corresponding to the CSI.

Optionally, the location information comprises at least one of:
reference signal time difference (RSTD);
reference signal received power (RSRP);
relative time difference (RTD);
SNR or SINR;
a transmit/receive time difference of the first device;
a time of arrival (TOA) measurement value;
a positioning reference signal (PRS) resource ID or a PRS resource set ID;
angle information;
a time stamp associated with a measurement value of the first device;
a location index.

In this regard, it should be noted that the apparatus provided in the embodiments of the present disclosure can implement all method steps implemented by the foregoing information processing method embodiments applied to the second device, and can achieve the same technical effects, and details of parts same as those in the method embodiments and beneficial effects thereof are not repeated herein.

It should be noted that, in the embodiments of the present disclosure, the division of units is schematic and is merely a logical function division, and other division manners may be adopted in actual implementation. In addition, the functional units in the embodiments of the present disclosure may be integrated into one processing unit, or each unit may physically exist alone, or two or more units may be integrated into one unit. The integrated unit may be implemented in a hardware form, or may be implemented in a form of a software functional unit.

When the integrated unit is implemented in the form of a software functional unit and sold or used as an independent product, the integrated unit may be stored in a processor-readable storage medium. Based on such an understanding, the technical solutions of the present disclosure, in essence or the part contributing to related technologies, or all or a part of the technical solutions, may be embodied in the form of a software product, and the computer software product is stored in a storage medium and comprises several instructions for enabling a computer device (which may be a personal computer, a server, a network device, or the like) or a processor to execute all or a part of steps of the methods described in the embodiments of the present disclosure. The foregoing storage medium comprises: a U disk, a removable hard disk, a read-only memory (ROM), a random access memory (RAM), a magnetic disk, an optical disk, or other media capable of storing program codes.

In some embodiments of the present disclosure, a processor-readable storage medium is further provided, and the processor-readable storage medium stores program instructions, and the program instructions are used for enabling the processor to execute all steps implemented by the method embodiments executed by the first device or all steps implemented by the method embodiments executed by the second device, and the same technical effects can be achieved, and details of parts same as those in the method embodiments and beneficial effects thereof are not repeated herein.

The terminal device involved in the embodiments of the present disclosure may refer to a device providing voice and/or data connectivity for a user, such as a handheld device with a wireless connection function, or other processing devices connected to a wireless modem, or the like. In different systems, the terminal device may be named differently; for example, in a 5th-generation (5G) mobile communication system, the terminal device may be referred to as user equipment (UE). The wireless terminal device may communicate with one or more core networks (CNs) through a radio access network (RAN), and the wireless terminal device may be a mobile terminal device, such as a mobile phone (also referred to as a "cellular" phone) and a computer having a mobile terminal device, for example, a portable, pocket-sized, handheld, computer-built-in, or vehicle-mounted mobile apparatus, which exchanges voice and/or data with the radio access network. For example, the wireless terminal device may be a personal communication service (PCS) phone, a cordless phone, a session initiated protocol (SIP) phone, a wireless local loop (WLL) station, a personal digital assistant (PDA), or the like. The wireless terminal device may also be referred to as a system, a subscriber unit, a subscriber station, a mobile station, a mobile, a remote station, an access point, a remote terminal device, an access terminal device, a user terminal device, a user agent, a user device, or the like, and the embodiments of the present disclosure are not limited thereto.

The network device (or network-side device) involved in the embodiments of the present disclosure may be a base station, and the base station may comprise a plurality of cells providing services for a terminal. According to different application scenarios, the base station may also be referred to as an access point, or may be a device in an access network that communicates with a wireless terminal device through one or more sectors over an air interface, or may be referred to by other names. The network device may be configured to interchange received air frames with Internet Protocol (IP) packets, and serves as a router between a wireless terminal device and the rest of an access network, wherein the rest of the access network may comprise an Internet Protocol (IP) communication network. The network device may further coordinate management of attributes of the air interface. For example, the network device involved in the embodiments of the present disclosure may be a network device (Base Transceiver Station, BTS) in a Global System for Mobile communications (GSM) or a Code Division Multiple Access (CDMA) system, may be a network device (NodeB) in a Wide-band Code Division Multiple Access (WCDMA) system, may further be an evolved network device (evolutional Node B, eNB or e-NodeB) in a Long Term Evolution (LTE) system, a 5G base station (gNB) in a 5G network architecture (next generation system), a base station of a 6th-generation (6G) mobile communication system, or may be a Home evolved Node B (HeNB), a relay node, a femto, a pico, or the like, which is not limited in the embodiments of the present disclosure. In some network architectures, the network device may comprise a Centralized Unit (CU) node and a Distributed Unit (DU) node, and the Centralized Unit and the Distributed Unit may also be geographically separated.
one or more antennas may be respectively used between the network device and the terminal device to perform Multi Input Multi Output (Multi Input Multi Output, MIMO) transmission, and the MIMO transmission may be Single User MIMO (Single User MIMO, SU-MIMO) or Multiple User MIMO (Multiple User MIMO, MU-MIMO). According to a form and a number of antenna combinations, the MIMO transmission may be 2Dimension MIMO (2Dimension MIMO, 2D-MIMO), 3Dimension MIMO (3Dimension MIMO, 3D-MIMO), Full Dimension MIMO (Full Dimension MIMO, FD-MIMO), or massive-MIMO, and may also be diversity transmission, precoding transmission, beamforming transmission, or the like.

The technical solutions provided in the embodiments of the present disclosure may be applicable to a variety of systems, in particular, a 5G system or a 6G system. For example, applicable systems may include a global system of mobile communication (global system of mobile communication, GSM) system, a code division multiple access (code division multiple access, CDMA) system, a Wideband Code Division Multiple Access (Wideband Code Division Multiple Access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G New Radio (New Radio, NR) system, a 6G system, and the like. In these various systems, terminal devices and network side devices may be included. A core network part may also be included in the system. Optionally, these systems include a management entity for performing model lifecycle management and/or data collection.

Those skilled in the art should appreciate that the embodiments of the present disclosure may be provided as a method, a system, or a computer program product. Accordingly, the present disclosure may take the form of an entirely hardware embodiment, an entirely software embodiment, or an embodiment combining software and hardware aspects. Moreover, the present disclosure may take the form of a computer program product implemented on one or more computer-usable storage media (including, but not limited to, a disk memory and an optical memory, and the like) having computer-usable program code embodied therein.

The present disclosure is described with reference to the flowcharts and/or block diagrams of methods, apparatuses (systems), and computer program products according to the embodiments of the present disclosure. It should be appreciated that each process and/or block in the flowcharts and/or block diagrams, and combinations of processes and/or blocks in the flowcharts and/or block diagrams, may be implemented by computer-executable instructions. Such computer-executable instructions may be provided to a processor of a general-purpose computer, a special-purpose computer, an embedded processor, or other programmable data processing equipment to produce a machine, such that the instructions executed via the processor of the computer or other programmable data processing equipment create an apparatus for implementing the functions specified in one process or more processes of the flowchart and/or one block or more blocks of the block diagram.

These processor-executable instructions may also be stored in a processor-readable memory that can direct a computer or other programmable data processing equipment to operate in a particular manner, such that the instructions stored in the processor-readable memory create an article of manufacture including an instruction means, and the instruction means implements the functions specified in one process or more processes of the flowchart and/or one block or more blocks of the block diagram.

These processor-executable instructions may also be loaded onto a computer or other programmable data processing equipment, such that a series of operational steps are performed on the computer or other programmable equipment to produce a computer-implemented process, and thus, the instructions executed on the computer or other programmable equipment provide steps for implementing the functions specified in one process or more processes of the flowchart and/or one block or more blocks of the block diagram.

It should be noted that the division of the above modules is merely a division based on logical functions, and, in actual implementation, the modules may be all or partially integrated into one physical entity, or may be physically separated; and the modules may be all implemented in a form of software invoked by a processing element; may be all implemented in a form of hardware; or may be implemented such that part of the modules are implemented in a form of software invoked by a processing element and part of the modules are implemented in a form of hardware; for example, a determining module may be implemented by a separately provided processing element, or may be implemented by being integrated into one chip of the above apparatus; in addition, the determining module may be stored in a memory of the above apparatus in a form of program code, and invoked and executed by one processing element of the above apparatus to implement functions of the determining module; implementations of other modules are similar thereto; in addition, all or a part of the modules may be integrated together, or may be implemented independently; the processing element described herein may be an integrated circuit having a capability of processing signals; and, in an implementation process, steps of the above method or the above modules may be implemented by integrated logic circuits of hardware in a processor element, or by instructions in a form of software.

Optionally, each module, unit, sub-unit, or sub-module may be one or more integrated circuits configured to implement the above method, for example: one or more application specific integrated circuits (Application Specific Integrated Circuit, ASICs), or one or more digital signal processors (digital signal processor, DSPs), or one or more field programmable gate arrays (Field Programmable Gate Array, FPGAs), and the like. Optionally, when one of the above modules is implemented in a form of scheduling program code by a processing element, the processing element may be a general-purpose processor, for example, a central processing unit (Central Processing Unit, CPU), or other processors capable of invoking program code. Optionally, these modules may be integrated together and implemented in a form of a system-on-a-chip (system-on-a-chip, SOC).

The terms "first", "second", and the like in the specification and claims of the present disclosure are used for distinguishing similar objects, and are not necessarily used to describe a specific order or sequence. It should be understood that such data used in an interchangeable manner, in appropriate circumstances, so that the embodiments of the present disclosure described herein can be implemented in an order other than those illustrated or described herein. In addition, the terms "include" and "have", and any variations thereof, are intended to cover a non-exclusive inclusion, for example, a process, method, system, product, or apparatus that includes a series of steps or units is not necessarily limited to those steps or units explicitly listed, but may include other steps or units not explicitly listed or inherent to such process, method, product, or apparatus. In addition, "and/or" used in the specification and claims indicates at least one of the connected objects, for example, A and/or B and/or C indicates seven cases, including A alone, B alone, C alone, both A and B, both B and C, both A and C, and A, B, and C all present. Similarly, "at least one of A and B" used in the specification and claims should be understood as "A alone, B alone, or both A and B".

Apparently, those skilled in the art can make various modifications and variations to the present disclosure without departing from the spirit and scope of the present disclosure. Thus, if such modifications and variations of the present disclosure fall within the scope of the claims of the present disclosure and equivalent technologies thereof, the present disclosure is also intended to encompass such modifications and variations.

## Claims

1. An information processing method, performed by a first device, comprising:
determining first information corresponding to channel state information (CSI), wherein the first information is used to indicate one or more of: quality of the CSI, quality of a channel or a channel estimation value corresponding to the CSI, and quality of a precoding matrix corresponding to the CSI; and
transmitting the CSI and the first information.

2. The method according to claim 1, further comprising:
receiving a first reference signal; and
determining the CSI based on the first reference signal.

3. The method according to claim 2, wherein determining the first information corresponding to the CSI comprises:
determining, based on configuration information of the first reference signal and/or a second reference signal, the first information corresponding to the CSI.

4. The method according to any one of claims 1 to 3, wherein the first information comprises at least one of the following:
channel quality information;
channel information;
quality level information;
error information;
reference signal information corresponding to the CSI;
location information of the first device;
speed information of the first device.

5. The method according to claim 4, wherein the channel quality information comprises at least one of the following:
a signal to interference plus noise ratio (SINR) or a signal to noise ratio (SNR);
reference signal received power (RSRP);
a channel quality indicator (CQI).

6. The method according to claim 4, wherein the channel information comprises information used to indicate that a channel corresponds to at least one of the following:
delay spread;
angle spread;
mean delay;
Doppler shift;
Doppler spread;
a mean square error (MSE);
a normalized mean square error (NMSE);
a minimum mean square error (MMSE);
channel statistics;
distribution information of the channel.

7. The method according to claim 4, wherein the quality level information comprises at least one of the following:
a quality level of the CSI;
a quality level of a channel estimation value corresponding to the CSI;
a quality level of a precoding matrix corresponding to the CSI.

8. The method according to claim 4, wherein the error information comprises at least one of the following:
error information of the CSI;
error information of a channel or a channel estimation value corresponding to the CSI;
error information of a precoding matrix corresponding to the CSI.

9. The method according to claim 8, wherein the error information comprises at least one of the following:
a distance error;
an MSE, an NMSE, or an MMSE;
error information of a channel quality indicator (CQI);
error information of channel statistics.

10. The method according to claim 4, wherein reference signal information corresponding to the CSI comprises at least one of the following:
time-domain density of a first reference signal corresponding to the CSI;
frequency-domain density of the first reference signal corresponding to the CSI;
a pattern of the first reference signal corresponding to the CSI.

11. The method according to claim 4, wherein the location information comprises at least one of the following:
a reference signal time difference (RSTD);
reference signal received power (RSRP);
a relative time difference (RTD);
a signal to noise ratio (SNR) or a signal to interference plus noise ratio (SINR);
a transmit-receive time difference of the first device;
a time of arrival (TOA) measurement value;
a positioning reference signal (PRS) resource identifier (ID) or a PRS resource set ID;
angle information;
a timestamp associated with a measurement value of the first device;
a location index.

12. An information processing method, performed by a second device, comprising:
receiving channel state information (CSI) and first information, wherein the first information is used to indicate one or more of: quality of the CSI, quality of a channel or a channel estimation value corresponding to the CSI, and quality of a precoding matrix corresponding to the CSI.

13. The method according to claim 12, further comprising:
determining, based on the CSI and the first information, data for performance monitoring or model training.

14. The method according to claim 12, further comprising at least one of the following:
transmitting a first reference signal and/or a second reference signal;
transmitting configuration information of the first reference signal.

15. The method according to any one of claims 12 to 14, wherein the first information comprises at least one of the following:
channel quality information;
channel information;
quality level information;
error information;
reference signal information corresponding to the CSI;
location information of the first device;
speed information of the first device.

16. The method according to claim 15, wherein the channel quality information comprises at least one of the following:
a signal to interference plus noise ratio (SINR) or a signal to noise ratio (SNR);
reference signal received power (RSRP);
a channel quality indicator (CQI).

17. The method according to claim 15, wherein the channel information comprises information used to indicate that a channel corresponds to at least one of the following:
delay spread;
angle spread;
mean delay;
Doppler shift;
Doppler spread;
a mean square error (MSE);
a normalized mean square error (NMSE);
a minimum mean square error (MMSE);
channel statistics;
distribution information of the channel.

18. The method according to claim 15, wherein the quality level information comprises at least one of the following:
a quality level of the CSI;
a quality level of a channel estimation value corresponding to the CSI;
a quality level of a precoding matrix corresponding to the CSI.

19. The method according to claim 15, wherein the error information comprises at least one of the following:
error information of the CSI;
error information of a channel corresponding to the CSI or a channel estimation value corresponding to the CSI;
error information of a precoding matrix corresponding to the CSI.

20. The method according to claim 19, wherein the error information comprises at least one of the following:
a distance error;
an MSE, an NMSE, or an MMSE;
error information of a channel quality indicator (CQI);
error information of channel statistics.

21. The method according to claim 15, wherein reference signal information corresponding to the CSI comprises at least one of the following:
time-domain density of a first reference signal corresponding to the CSI;
frequency-domain density of the first reference signal corresponding to the CSI;
a pattern of the first reference signal corresponding to the CSI.

22. The method according to claim 15, wherein the location information comprises at least one of the following:
a reference signal time difference (RSTD);
reference signal received power (RSRP);
a relative time difference (RTD);
a signal to noise ratio (SNR) or a signal to interference plus noise ratio (SINR);
a transmit-receive time difference of the first device;
a time of arrival (TOA) measurement value;
a positioning reference signal (PRS) resource identifier (ID) or a PRS resource set ID;
angle information;
a timestamp associated with a measurement value of the first device;
a location index.

23. An information processing apparatus, comprising: a memory, a transceiver, and a processor, wherein:
the memory is configured to store a computer program;
the transceiver is configured to transmit and receive data under control of the processor; and
the processor is configured to read the computer program from the memory and perform operations comprising:
determining first information corresponding to channel state information (CSI), wherein the first information is used to indicate one or more of: quality of the CSI, quality of a channel or a channel estimation value corresponding to the CSI, and quality of a precoding matrix corresponding to the CSI; and
transmitting the CSI and the first information.

24. The apparatus according to claim 23, wherein the processor is further configured to perform operations comprising:
receiving a first reference signal; and
determining the CSI based on the first reference signal.

25. The apparatus according to claim 24, wherein the processor is further configured to perform operations comprising:
determining, based on configuration information of the first reference signal and/or a second reference signal, the first information corresponding to the CSI.

26. The apparatus according to any one of claims 23 to 25, wherein the first information comprises at least one of the following:
channel quality information;
channel information;
quality level information;
error information;
reference signal information corresponding to the CSI;
location information of the first device;
speed information of the first device.

27. The apparatus according to claim 26, wherein the channel quality information comprises at least one of the following:
a signal to interference plus noise ratio (SINR) or a signal to noise ratio (SNR);
reference signal received power (RSRP);
a channel quality indicator (CQI).

28. The apparatus according to claim 26, wherein the channel information comprises information used to indicate that a channel corresponds to at least one of the following:
delay spread;
angle spread;
mean delay;
Doppler shift;
Doppler spread;
a mean square error (MSE);
a normalized mean square error (NMSE);
a minimum mean square error (MMSE);
channel statistics;
distribution information of the channel.

29. The apparatus according to claim 26, wherein the quality level information comprises at least one of the following:
a quality level of the CSI;
a quality level of a channel estimation value corresponding to the CSI;
a quality level of a precoding matrix corresponding to the CSI.

30. The apparatus according to claim 26, wherein the error information comprises at least one of the following:
error information of the CSI;
error information of a channel corresponding to the CSI or a channel estimation value corresponding to the CSI;
error information of a precoding matrix corresponding to the CSI.

31. The apparatus according to claim 30, wherein the error information comprises at least one of the following:
a distance error;
an MSE, an NMSE, or an MMSE;
error information of a channel quality indicator (CQI);
error information of channel statistics.

32. The apparatus according to claim 26, wherein reference signal information corresponding to the CSI comprises at least one of the following:
time-domain density of a first reference signal corresponding to the CSI;
frequency-domain density of the first reference signal corresponding to the CSI;
a pattern of the first reference signal corresponding to the CSI.

33. The apparatus according to claim 26, wherein the location information comprises at least one of the following:
a reference signal time difference (RSTD);
reference signal received power (RSRP);
a relative time difference (RTD);
a signal to noise ratio (SNR) or a signal to interference plus noise ratio (SINR);
a transmit-receive time difference of the first device;
a time of arrival (TOA) measurement value;
a positioning reference signal (PRS) resource identifier (ID) or a PRS resource set ID;
angle information;
a timestamp associated with a measurement value of the first device;
a location index.

34. An information processing apparatus, comprising: a memory, a transceiver, and a processor, wherein:
the memory is configured to store a computer program;
the transceiver is configured to transmit and receive data under control of the processor; and
the processor is configured to read the computer program from the memory and perform operations comprising:
receiving channel state information (CSI) and first information, wherein the first information is used to indicate one or more of: quality of the CSI, quality of a channel or a channel estimation value corresponding to the CSI, and quality of a precoding matrix corresponding to the CSI.

35. The apparatus according to claim 34, wherein the processor is further configured to perform operations comprising:
determining, based on the CSI and the first information, data for performance monitoring or model training.

36. The apparatus according to claim 34, wherein the processor is further configured to perform at least one of the following operations:
transmitting a first reference signal and/or a second reference signal;
transmitting configuration information of the first reference signal.

37. The apparatus according to any one of claims 34 to 36, wherein the first information comprises at least one of the following:
channel quality information;
channel information;
quality level information;
error information;
reference signal information corresponding to the CSI;
location information of the first device;
speed information of the first device.

38. An information processing apparatus, comprising: a memory, a transceiver, and a processor, wherein:
the memory is configured to store a computer program;
the transceiver is configured to transmit and receive data under control of the processor; and
the processor is configured to read the computer program from the memory and perform operations comprising:
determining first information corresponding to channel state information (CSI), wherein the first information is used to indicate one or more of: quality of the CSI, quality of a channel or a channel estimation value corresponding to the CSI, and quality of a precoding matrix corresponding to the CSI; and
transmitting the CSI and the first information.

39. The apparatus according to claim 38, wherein the processor is further configured to perform operations comprising:
receiving a first reference signal; and
determining the CSI based on the first reference signal.

40. The apparatus according to claim 39, wherein the processor is further configured to perform operations comprising:
determining, based on configuration information of the first reference signal and/or a second reference signal, the first information corresponding to the CSI.

41. The apparatus according to any one of claims 38 to 40, wherein the first information comprises at least one of the following:
channel quality information;
channel information;
quality level information;
error information;
reference signal information corresponding to the CSI;
location information of the first device;
speed information of the first device.

42. The apparatus according to claim 41, wherein the channel quality information comprises at least one of the following:
a signal to interference plus noise ratio (SINR) or a signal to noise ratio (SNR);
reference signal received power (RSRP);
a channel quality indicator (CQI).

43. The apparatus according to claim 41, wherein the channel information comprises information used to indicate that a channel corresponds to at least one of the following:
delay spread;
angle spread;
mean delay;
Doppler shift;
Doppler spread;
a mean square error (MSE);
a normalized mean square error (NMSE);
a minimum mean square error (MMSE);
channel statistics;
distribution information of the channel.

44. The apparatus according to claim 41, wherein the quality level information comprises at least one of the following:
a quality level of the CSI;
a quality level of a channel estimation value corresponding to the CSI;
a quality level of a precoding matrix corresponding to the CSI.

45. The apparatus according to claim 41, wherein the error information comprises at least one of the following:
error information of the CSI;
error information of a channel corresponding to the CSI or a channel estimation value corresponding to the CSI;
error information of a precoding matrix corresponding to the CSI.

46. The apparatus according to claim 45, wherein the error information comprises at least one of the following:
a distance error;
an MSE, an NMSE, or an MMSE;
error information of a channel quality indicator (CQI);
error information of channel statistics.

47. The apparatus according to claim 41, wherein reference signal information corresponding to the CSI comprises at least one of the following:
time-domain density of a first reference signal corresponding to the CSI;
frequency-domain density of the first reference signal corresponding to the CSI;
a pattern of the first reference signal corresponding to the CSI.

48. The apparatus according to claim 41, wherein the location information comprises at least one of the following:
a reference signal time difference (RSTD);
reference signal received power (RSRP);
a relative time difference (RTD);
a signal to noise ratio (SNR) or a signal to interference plus noise ratio (SINR);
a transmit-receive time difference of the first device;
a time of arrival (TOA) measurement value;
a positioning reference signal (PRS) resource identifier (ID) or a PRS resource set ID;
angle information;
a timestamp associated with a measurement value of the first device;
a location index.

49. An information processing apparatus, comprising: a memory, a transceiver, and a processor, wherein:
the memory is configured to store a computer program;
the transceiver is configured to transmit and receive data under control of the processor; and
the processor is configured to read the computer program from the memory and perform operations comprising:
receiving channel state information (CSI) and first information, wherein the first information is used to indicate one or more of: quality of the CSI, quality of a channel or a channel estimation value corresponding to the CSI, and quality of a precoding matrix corresponding to the CSI.

50. The apparatus according to claim 49, wherein the processor is further configured to perform operations comprising:
determining, based on the CSI and the first information, data for performance monitoring or model training.

51. The apparatus according to claim 49, wherein the processor is further configured to perform at least one of the following operations:
transmitting a first reference signal and/or a second reference signal;
transmitting configuration information of the first reference signal.

52. The apparatus according to any one of claims 49 to 51, wherein the first information comprises at least one of the following:
channel quality information;
channel information;
quality level information;
error information;
reference signal information corresponding to the CSI;
location information of the first device;
speed information of the first device.

53. A processor-readable storage medium storing a computer program, wherein the computer program is used to cause a processor to perform steps of the information processing method according to any one of claims 1 to 11, or perform steps of the information processing method according to any one of claims 12 to 22.
